# EUROPEAN PATENT APPLICATION

(11) **EP 4 537 695 A1**
(43) Date of publication of application: **16.04.2025**
(21) Application number: 24205580.4
(22) Date of filing: 09.10.2024
(51) Int. Cl.: A43B 1/04, A43B 5/02, A43B 13/12, A43B 23/04, B33Y 80/00

(54) **ARTICLE OF FOOTWEAR WITH ONE OR MORE STUDS**

(30) Priority: 13.10.2023 DE 102023210060
(71) Applicant: adidas AG, 91074 Herzogenaurach (DE)
(72) Inventor: THOMPSETT, Benjamin Alexander, 91074 Herzogenaurach (DE); ABEL, Rohan, 91074 Herzogenaurach (DE); ETZOLD, Matthias, 91074 Herzogenaurach (DE); GORDON, Andrew, 91074 Herzogenaurach (DE); BIEGEL, Tobias, 91074 Herzogenaurach (DE); TARENNE, Baptiste, 91074 Herzogenaurach (DE); FISCHHOLD, Marco, 91074 Herzogenaurach (DE); MERKER, Sergius, 91074 Herzogenaurach (DE)
(74) Representative: Bardehle Pagenberg Partnerschaft mbB Patentanwälte Rechtsanwälte

(57) **Abstract**

The present disclosure relates to an article (100) of footwear with one or more studs, in particular a sports shoe, such as a soccer shoe, the article of footwear comprising: an upper (no); and an intermediate component (120); wherein the intermediate component is arranged in an underfoot portion (111) of the article (100) and extends at least partially to a medial side portion (112) and / or to a lateral side portion (113) of the upper (no). The present disclosure also relates to an article of footwear (100) with one or more studs, in particular a sports shoe, such as a soccer shoe, the article of footwear comprising: an upper; an intermediate component; and an outsole (130); wherein the outsole comprises one or more apertures (132), configured to allow the intermediate component (120) to expand at least partially into the outsole (130).

## Description

### 1. Technical field

The present invention relates to an article of footwear with one or more studs, in particular a sports shoe such as a soccer shoe. The article of footwear comprises an intermediate component arranged in an underfoot portion of the article.

### 2. Prior art

Articles of footwear and uppers for such articles are generally known and have various purposes and use cases. For instance, they may be designed to provide benefits for sport applications, for daily work, for leisure time or the like. Particularly in sport applications, uppers for shoes have the potential to provide beneficial performance characteristics such that the overall performance of the wearer during an athletic activity can be increased.

An article of footwear is commonly described as the combination of an upper and a sole. Typically, the upper covers regions such as the instep, the toe, the medial side, the lateral side, and the heel of a wearer's foot and provides an opening to allow the wearer to step inside the footwear. The sole is connected to the upper such that the sole's top side faces an underfoot portion of the upper, and its bottom side touches the ground during ordinary use of the shoe.

An article of footwear with one or more studs, which can also be referred to as a cleated article of footwear, is usually used in applications, where an improved grip to the ground is required. Such articles of footwear are becoming more and more important and have specific requirements to facilitate that the wearer can perform his or her athletic activities. Exemplary requirements that are of importance to such an article of footwear is that it should be comfortable to wear, stabilize the foot, and reduce pressure on the foot that may result from the ground to the foot, in particular from the ground to the foot via studs. Moreover, the foot of a wearer should be able to expand more naturally, whilst the article of footwear still provides for an improved grip to the ground. In addition, in athletic activities involving a ball or the like, such as soccer, rugby, football, and other ball sports, enhanced grip between the article of footwear and the ball needs to be provided. Such enhanced grip bears the potential that a wearer can control the ball to a greater extent.

Exemplarily, the following prior art documents may be mentioned in the context of the present disclosure.

Prior art document US 11 185 127 B2 relates to an article of footwear, which includes a tubular knit upper and an outsole. Further, a thermoplastic polyurethane skin layer is disposed between the tubular knit upper and the outsole. The outsole comprises a plurality of regions intended to support and stabilize a foot of a user when the user sits in various sedentary positions.

Prior art document US 11 129 436 B2 relates to a golf shoe, which includes one or more of the following: a foot stabilizer system that interacts with a shoe securing system to securely engage and / or wrap around a foot of a wearer; a natural motion sole, optionally including flex grooves that allow a weight transfer from back-to-front and / or from side-to-side; a six cleat configuration (e.g., four cleats in a forefoot region, two cleats in a heel region, and no cleats located directly under a big toe); a forefoot moderator plate positioned to moderate or reduce user feel of the forefoot cleats; a lateral half heel counter extending from a rear heel area to a lateral midfoot or lateral forward heel area of the shoe; and / or one or more medial, forefoot, sidewall traction elements at or near a big toe area of the sole.

Prior art document US 11 122 854 B2 relates to an article of footwear, which may include an upper and a sole structure. The upper may include an exposed outer layer forming at least a portion of an external surface of the upper. The upper may also include a polymer foam material selectively located on an inner side of the exposed outer layer and adjacent portions of the exposed outer layer, thereby forming padded portions of the upper. The padded portions of the upper may be located in areas of the article of footwear that correspond with predetermined bones of a foot of a wearer of the article of footwear.

Furthermore, the following prior art may be mentioned for background knowledge.

US 10 820 658 B2 relates to a sole structure for an article of footwear, which includes an outsole that has a body with a lateral side and a medial side and has a plurality of tread elements extending from the body to establish a ground contact surface.

US 3 852 895 A is directed to an article of footwear having an outsole, a sole shell, an insole and an upper, in which, the outsole is formed as an internally and externally ridged member having a peripheral wall and defining a cavity on an inner side thereof, the sole shell being formed of reaction foam during a foaming operation.

GB 1 339 611 A relates to a boot or shoe, which includes an upper sewn to a cushion insole and molded-on an outsole, the under face of the insole being non-permeable to the outsole material when it is in flowable condition during molding.

GB 2 481 369 B is directed to an athletic shoe, which comprises an upper, an outsole, an insole, and a midsole made from a resiliently deformable foam material interposed between the insole and the outsole.

US 9 320 318 B2 relates to shoes and / or shoe elements that facilitate natural foot motion and / or reduce forces tending to fight natural foot motion. In at least some such structures, a wearer's heel is secured to the hindfoot region of a shoe (e.g., by a strap system) in a manner that permits heel / forefoot rotation and that allows the lower leg to remain straight.

While the above documents claimed improvement over the known prior art thus far, the proposed solutions of said documents still have some deficiencies when it comes to providing the above noted requirements to an article of footwear with one or more studs. Hence, when reviewing the prior art, it must be concluded that there is still room for improvement.

Against this background, it is an object of the present invention to provide an improved article of footwear. The wearer should be able to perform athletic activities in an improved manner. Further, the article of footwear should be comfortable to wear, it should stabilize the foot, and reduce pressure that may re-suit from the ground. The foot of a wearer should be able to expand more naturally, whilst the article of footwear still provides for an improved grip to the ground. In addition, enhanced grip between the article of footwear and a ball should be provided.

### 3. Summary of the invention

The above-mentioned objects are at least partially achieved by the subject-matter of the independent claims. Preferred embodiments are subject of the dependent claims, and other suitable aspects of the present invention are described through the overall disclosure of the present application.

In a first aspect, the objects are solved by an article of footwear with one or more studs, in particular a sports shoe such as a soccer shoe, the article of footwear comprising: an upper; and an intermediate component configured to act as a cushioning component; wherein the intermediate component is arranged in an underfoot portion of the article of footwear and extends at least partially to a medial side portion and / or to a lateral side portion of the upper.

In this manner, the article of footwear facilitates improved cushioning to the wearer, which is useful for any kind of athletic activity. In particular, this is useful where the article of footwear is provided with studs, since pressure resulting from these studs may be compensated at least partially attributable to the intermediate component. It is noted that since studs are typically rather rigid to ensure a sufficient grip to the ground, they usually lead to pressure peaks, which can distract the wearer in performing his or her athletic activity when using prior art articles of footwear. The inventors found a way to overcome these problems according to the article of footwear with one or more studs as described herein.

Further, the intermediate component being arranged in an underfoot portion has the additional benefit that the wearer's foot may be in close contact to the intermediate component, which can contribute to a more comfortable sensation to the wearer.

Moreover, the foot of a wearer can expand more naturally, without being particularly restricted in one or more directions.

Further, having the intermediate component arranged in the underfoot portion, may also provide the advantage that a vertical compression stiffness of one or more studs (if available) is reduced. This may provide damping to a ball when controlling the ball by contacting the ball with the one or more studs substantially directly. This may be a situation which often occurs during soccer and / or Rugby and is highly appreciated by the player.

Moreover, the intermediate component has the additional advantage that an outsole (if available) of the shoe can be made wider relative to articles of footwear of the prior art, whilst retaining a stream-lined upper. The intermediate component (which may comprise foam and / or which may be a foam component as described elsewhere herein, or which may comprise a lattice structure as described elsewhere herein) allows for the foot of the wearer to expand into the intermediate component. Thereby, the intermediate component may be compressed, however, in some cases, such compressing may occur without the foot extending over an edge of the outsole. Thereby, stability of the foot of the wearer is improved, which is particularly important when the wearer performs an athletic activity.

Further, as the intermediate component extends at least partially to a medial side portion and / or to a lateral side portion of the upper, this can aid in improving athletic performance when doing athletic activities involving a ball or the like. In particular, the intermediate component may aid in improving a contact between the ball and the article of footwear, which can enhance the grip between the article and the ball. Thereby, shooting, passing, or any kind of contact between the article and the ball could be improved. Further, the intermediate component may act as a damping pad, which can be advantageous for receiving passes. Without wishing to be bound by theory, it is believed that the wearer of the article may have more time for receiving the pass and, consequently, for making another pass or a shoot due to the intermediate component extending at least partially to a medial side portion and / or a lateral side portion of the upper. In particular, the ball may decelerate more quickly upon a contact with the intermediate component compared to prior art solutions not having this feature. In prior art solutions, the ball may in some instances bounce back directly upon touching the article of footwear, which could be disadvantageous for dribbling with the ball. Further, the intermediate component may also provide for a smoother ball contact, which could be advantageous for shooting, passing, or the like.

The intermediate component may extend strategically to certain portions of the upper to suit specific needs of the athletic activity. This may also improve the outer appearance of the article, which is appreciated by the wearer. In addition, this could give the wearer an indication at which locations of the upper these functional benefits of the intermediate component are provided.

The "upper" referred to herein may be any upper suitable for an article of footwear with one or more studs.

As described elsewhere herein, the "intermediate component" referred to herein may be a component that comprises foam and / or which is substantially made of foam or a component that comprises a lattice structure.

In the example when the intermediate component is a component that comprises foam and / or which is substantially made of foam, the following may aid an understanding thereof. For instance, when reference is made herein to something being substantially made of a material, manufacturing tolerances usually have to be taken into consideration. Thereby, it cannot be ruled out that minor amounts of further materials not being foam may be comprised by the intermediate component. Thus, the material compositions described herein may vary slightly. Various foams are encompassed by the present disclosure, for instance one or more and / or any combination of at least the following non-exhaustive list: polyurethane foam (PU), thermoplastic polyurethane foam (TPU), polyamide (PA) foam, polyether-block-amide (PEBA) foam, thermoplastic polyester ether elastomer (TPEE) foam. The intermediate component may be an integral piece, such as an integral layer. As described elsewhere herein, the intermediate component could be manufactured in various ways, including but not limited to an additive manufacturing process (e.g., 3d-printing- or deposition techniques).

The "underfoot portion" of the article referred to herein may refer to an area that makes substantially contact with the sole of the wearer's foot when the article of footwear is worn and / or that receives most of the pressure during walking, running, or the like.

The intermediate component "extending" at least partially to a medial side portion and / or to a lateral side portion of the upper as referred to herein means that the intermediate component is present at least partially in these portions. Thus, it may be the case that the intermediate component is also present in a portion that extends upwards of the bite line of the upper. In one example, the intermediate component may be visible from outside, due to its extension. In one example, the intermediate component may be at least partially free, i.e., such that no other part, element, component or the like is arranged on top of said portion where it is free. In one example, the intermediate component may be at least partially directly facing the environment. To illustrate this in an example, the intermediate component could be at least partially touched or the like by a wearer.

The "wearer" referred to herein may be any kind of human capable of wearing an article of footwear. The term "wearer" may be used synonymously to the terms "user", "athlete", "human being" or the like.

### Wrapping / extension of intermediate component

In a preferred embodiment of the article of footwear with one or more studs as described herein, the intermediate component wraps the upper at least partially, wherein the intermediate component optionally comprises a foam component and / or a lattice structure.

The means that the intermediate component may essentially enclose and / or cover the upper at least partially.

This provides an additional function to the upper. In one example, it may contribute at least partially to an improved integrity of the upper. Thereby, the upper may be less prone to breakage, failure, or the like.

Further, the intermediate component may provide for a protection of the part of the upper that is wrapped. In addition, the outer appearance of the intermediate component could be adjusted so as to indicate the wearer that the part that wraps the upper has a certain functionality. Thereby, the wearer may adapt his or her performance accordingly. For instance, the wearer may try to hit a ball with said intermediate component rather than with another part of the upper that is not provided with this functionality.

As described elsewhere herein, in one example, the intermediate component may comprise or may be a foam component. In another example, the intermediate component may comprise or may be a lattice structure.

The "foam component" referred to herein is a component that is substantially made of foam as described elsewhere herein. It is understood that when reference is made here to something being substantially made of a material, manufacturing tolerances usually have to be taken into consideration. Thereby, it cannot be ruled out that minor amounts of further materials not being foam may be comprised by the intermediate component. Thus, the material compositions described herein may vary slightly. Various foams are encompassed by the present disclosure, for instance one or more and / or any combination of at least the following non-exhaustive list: polyurethane foam (PU), thermoplastic polyurethane foam (TPU), polyamide (PA) foam, polyether-block-amide (PEBA) foam, thermoplastic polyester ether elastomer (TPEE) foam. The intermediate component may be an integral piece, such as an integral layer.

The "lattice structure" as referred to in the present disclosure may refer to a lattice-like pattern or structure as described elsewhere herein in greater detail.

In a preferred embodiment of the article of footwear with one or more studs as described herein, the intermediate component wraps at least one of a toe portion, a medial side portion, a heel portion, or a lateral side portion, in particular a midfoot lateral side portion of the upper at least partially.

It is noted that wrapping as referred to herein does not necessarily mean that a portion of the upper is fully encircled by the intermediate component. In one example, wrapping as referred to herein could mean that the intermediate component forms kind of a cup or the like around a portion of the upper.

When the intermediate component wraps a heel portion, this provides the advantages that pressure in the heel of the wearer can be reduced. This may be particularly advantageous when a heel counter is provided. Such heel counter, for instance an external heel counter is often employed to provide for more stability in the heel portion of the upper. Further, an outsole may be rather rigid in a heel portion thereof to provide for stability and a firm fit. Thereby, wrapping the heel portion at least partially is particularly useful for this kind of article of footwear.

When the intermediate component wraps a lateral side portion, this provides the advantage that more stability can be provided to this portion, which can be beneficial for cutting movements and / or shooting. Cutting movements in this context may comprises a natural repositioning movement which allows an athlete to quickly use an appropriate angle to change the path of the body. This is often done in athletic activities such as soccer, football, rugby, or the like.

The midfoot lateral side portion of the upper is important for providing support, stability, and a secure fit to the foot of the wearer. Furthermore, this may enhance that shooting and or passing is improved. This may in particular apply when curved shots and / or shots with a spin are made by the athlete in which the ball is touched with the midfoot lateral side portion of the upper to provide for a certain spin to the ball.

In a preferred embodiment of the article of footwear with one or more studs as described herein, the intermediate component wraps a complete periphery of the upper.

The periphery of the upper may be understood as the outer edges or boundaries of the upper. The periphery of the upper may be in proximity to the sole region of the upper. In other words, the periphery may be in a bottom portion of the upper, the normal of which facing in a horizontal direction. The horizontal direction may be in a plane defined by a heel to toe axis and a medial to lateral axis. As understood by the skilled person, the outer edges or boundaries of the upper may then be covered by the intermediate component, such that the intermediate component then forms an outermost part of the upper.

Wrapping the complete periphery of the upper further adds on the foregoing advantages in that an improved cushioning and / or an improved stability to the foot of the wearer can be provided.

In a preferred embodiment of the article of footwear with one or more studs as described herein, the underfoot portion comprises a forefoot portion, a midfoot portion, and / or a rearfoot portion of the upper, wherein the underfoot portion preferably comprises the forefoot portion, the midfoot portion, and the rearfoot portion.

Thereby, the underfoot portion may encompass a relatively large portion, which is beneficial to provide for an improved cushioning effect to the foot of the wearer attributable to the intermediate component, which is arranged in said underfoot portion of the article.

In a preferred embodiment of the article of footwear with one or more studs as described herein, the intermediate component covers at least 50 %, preferably at least 60 %, more preferably at least 70 %, even more preferably at least 80 %, further more preferably at least 90 %, further more preferably at least 95 %, most preferably 100 % of the underfoot portion.

The respective advantages of this embodiment can be derived from the advantages as described in the foregoing embodiment.

The underfoot portion of the article may be determined for instance in a plane defined by a heel to toe axis and a medial to lateral axis of the article of footwear. In other words, the underfoot portion of the article may be measured substantially in a horizontal plane, perpendicular to a vertical axis. Said vertical axis may substantially correspond to the wearer's main body axis from head to foot when the wearer stands on the ground.

### Openings in intermediate component

In a preferred embodiment of the article of footwear with one or more studs as described herein, the intermediate component comprises one or more openings, wherein the one or more openings are preferably arranged in a medial side portion of the upper, in particular a midfoot medial side portion of the upper.

The one or more openings have the advantage of further contributing to an improved expansion of the intermediate component. For instance, the openings may allow the intermediate component to expand substantially horizontally, such as horizontally relative to a surface of the intermediate component facing the exterior, such as an outer facing surface of the intermediate component. This may improve the damping effect, which is appreciated by the wearer. In particular, the damping effect may be improved without substantially impacting durability. Thus, a density of the intermediate component does not need to be altered, although this is not precluded by the present disclosure.

The one or more openings of the intermediate component may be implemented in various ways, including but not limited to grooves, slots, slits, cut-outs or the like as described elsewhere herein. The one or more openings may additionally or alternatively be implemented by way of apertures, having a similar shape as described in relation to the apertures of the outsole. The one or more openings may be through-holes. This may further contribute to an enhanced damping effect. The one or more openings may have a closed boundary or a boundary that is open to the environment.

The closed boundary may be understood such that the one or more openings are enclosed by a periphery of the intermediate component. In other words, the one or more openings may be within the intermediate component. For instance, the one or more openings may not necessarily be a cut-out and / or a groove at the periphery of the intermediate component.

The boundary that is open to the environment may be understood such that the one or more openings are not enclosed by a periphery of the intermediate component. The one or more openings may have any shape suitable for the purpose of allowing an expansion of the intermediate component.

### Inside / outside of the upper

In a preferred embodiment of the article of footwear with one or more studs as described herein, the intermediate component is arranged inside the upper, preferably as an innermost layer so as to contact a foot of a wearer at least partially when the article of footwear is worn, wherein the intermediate component optionally comprises a finish applied on a surface of the intermediate component, such as a textile, a spray, a coating.

This may be advantageous in case cushioning of the wearer's foot is of importance and / or providing for an improved grip to a ball or an improved deceleration of a ball may not be of great relevance. In such an embodiment, the intermediate component may not be visible from the outside the article of footwear and / or the intermediate component may not contact a ball in an athletic activity during ordinary usage. Nevertheless, the intermediate component may be visible from within the upper.

This embodiment has the advantage that the intermediate component can be specifically adapted to support cushioning. When the intermediate component comprises foam, the intermediate component may be applied as an internal foam to the upper. The intermediate component may be directly injected to the upper.

The "finish" applied on a surface of the intermediate component as referred to in the present disclosure may mean a final treatment and / or coating applied to the intermediate component. In some examples, the finish may be applied only on a free surface of the intermediate component, i.e., a surface that may be exposed to the environment, such as the air. It is noted that next to the outer environment of the article of footwear, additionally or alternatively the space where the foot of a wearer of the article of footwear is located may be referred to as the environment. In some examples, the finish may be applied only on surface of the intermediate component that is not free. In some examples, the finish may be applied only on all surfaces of the intermediate component. The finish may serve various purposes, including enhancing the appearance, durability, and functionality of the article of footwear.

There are several finishes encompassed according to the present disclosure, some of which but not all of them being encompassed are mentioned in the following: A glossy or high-shine finish may be achieved through the application of special coatings and / or polishes. It provides the article of footwear with a polished and shiny appearance. A matte finish lacks the high shine of a glossy finish and has a more subdued, non-reflective appearance. A suede finish comprises suede, which is a type of leather with a soft, napped surface. This kind of finish on an article of footwear involves brushing and / or buffing the surface of the intermediate component to create a textured, velvety appearance. A patent finish comprises patent leather having a highly polished and glossy finish that is achieved through multiple layers of varnish or lacquer. A distressed finish may comprise a distressed or worn-in appearance to create a vintage or rustic look. This finish often involves techniques like scuffing, sanding, or applying special dyes to achieve the desired effect to the intermediate component. Textured finishes can include embossed patterns, grain patterns, or other surface treatments that add visual interest and texture to the article of footwear's material, in particular the intermediate component thereof. A weatherproof finish comprises a treatment with weatherproof or water-resistant finishes to protect the intermediate component from moisture and the elements.

It is noted that various finishes are encompassed in the present disclosure, the choice of finish may impact the overall style and functionality of the article of footwear, in particular the intermediate component. It may be important to consider the intended use and personal preferences when selecting a specific finish, as different finishes are suitable for different occasions and environments.

Use of the textile finish as described in here hast the advantage of providing water resistance, stain resistance, breathability, durability, color and design enhancement, and / or a certain texture and feel. The textile finish may also include an antimicrobial finish, which can inhibit the growth of bacteria and odor. This may be particularly useful, when the article of footwear is used during an athletic activity.

It is noted that the intermediate component may be arranged between a lining layer of the article of footwear and a foot of the wearer.

The lining layer as referred to herein may be a layer on the inside of the article of footwear. Such a lining layer, or also termed "lining" may improve comfort, breathability and can help increase the lifespan of the article of footwear.

In a preferred embodiment of the article of footwear with one or more studs as described herein, the intermediate component is arranged outside the upper.

As described elsewhere herein, this contributes to an improved grip between a ball and the article of footwear. Further, visibility of the intermediate component may add to the advantages. The intermediate component may be directly injected to the upper.

The shape of the intermediate component as arranged on the upper may have a certain pattern, for instance when viewed along the medial side and / or lateral side. This may be designed such that it follows a travel trajectory of a ball during passing and / or shooting. It is understood that the travel trajectory may depend to some extent to a personal preference, on the type of shot, and / or on the strength of the shot. Hence, different patterns are possible as understood by the skilled person. The pattern may be characterized by one or more of the following non-exhaustive list: a length of the intermediate component in the upward direction (i.e., the vertical direction), a thickness of the intermediate component, a texture of the intermediate component.

### Outsole / apertures

In a preferred embodiment of the article of footwear with one or more studs as described herein, the article of footwear further comprises an outsole arranged below the intermediate component.

The outsole may be the bottom portion of the article of footwear that comes at least partially into direct contact with the ground. This means that not the overall outsole must necessarily contact the ground, as one or more studs being part of the outsole could primarily contact the ground and, thus, lift some other surfaces of the outsole above the group during some movements of the athlete. The outsole may offer several advantages that contribute to the overall performance, comfort, improved traction and grip, durability, stability and support, water and weather resistance of the article of footwear.

In a preferred embodiment of the article of footwear with one or more studs as described herein, the outsole comprises one or more apertures configured to allow the intermediate component to expand at least partially into the outsole.

An aperture may essentially be understood as an opening or the like. The term aperture may be used to convey the idea of an adjustable or fixed opening that serves a particular purpose. In the context of the present disclosure, the purpose of the aperture is that the intermediate component can expand at least partially into the outsole. This may be understood in such a manner, that the intermediate component may expand at least partially into the one or more apertures. The one or more apertures may adopt any suitable shape for this purpose. The one or more apertures may be implemented by means of one or more recesses.

This has the advantage that the outsole may be opened at least partially along the medial to lateral side. In other words, the outsole may be at least partially separated. Still, it is appreciated that the outsole is substantially attached to the intermediate component and thereby to the upper. The outsole can be attached to the intermediate component and / or to the upper by any kind of suitable attachment means including but not limited to adhesive bonding, welding or thermal bonding.

In a preferred embodiment of the article of footwear with one or more studs as described herein, the apertures have an elongated shape, preferably a shape of one of slits, grooves, cuts, or vents.

The term "elongated" means that there may be a dimension along one axis of the one or more apertures, which may be very much larger than one and preferably than both dimensions along the remaining axes, the remaining axes being substantially perpendicular to said one axis. It is understood that when dimensions are described herein, manufacturing tolerances usually have to be taken into consideration. Thus, the dimensions described herein may vary slightly.

This has the advantage that the mechanical integrity of the outsole can be substantially maintained whilst the intermediate component is configured to expand at least partially into the outsole.

The shapes specified in this embodiment have the further advantages that ventilation, cooling, aesthetics, functionality, and / or the like may be improved.

For instance, the foot of the wearer may be subject to somewhat greater ventilation which could reduce an accumulation of moisture. This also improves longevity of the article of footwear. In addition, the shapes have the advantage that essentially no disturbing objects from the environment, such as pebbles or the like, can accumulate therein and / or can protrude therethrough, which could impair the wearer's performance, and which could irritate the wearer.

In a preferred embodiment of the article of footwear with one or more studs as described herein, the one or more apertures define through holes.

This may facilitate the manufacturing of the article of footwear. Furthermore, the space provided for the intermediate component to expand may be increased. In addition, the intermediate component may be visible from the bottom of the article of footwear, such that its state, integrity, or the like may be assessed by personnel.

The term "through hole" means a hole that is made to go completely through the material of an object.

The through holes as referred to herein may be implemented by one or more cut-outs and / or one or more grooves.

In a preferred embodiment of the article of footwear with one or more studs as described herein, the one or more apertures extend in a longitudinal direction of the outsole.

The longitudinal direction of the outsole may be substantially parallel to a heel to toe axis.

This embodiment may have the advantage that a bending stiffness along a medial to lateral axis of the article of footwear can be substantially maintained, compared to a case in which the one or more apertures were extending in a traverse direction of the outsole. In addition, the one or more apertures can be designed to be rather long, so as to improve that the intermediate component can expand into the outsole at least partially. When the one or more apertures were to extend in a traverse direction of the outsole, the width of the outsole may limit the geometric extension of the apertures and, thereby, the length of the apertures.

In a preferred embodiment of the article of footwear with one or more studs as described herein, the one or more apertures have a closed boundary.

The closed boundary may be understood such that the one or more apertures are enclosed by the periphery of the outsole. In other words, the one or more apertures may be within the outsole. For instance, the one or more apertures may not necessarily be a cut-out and / or a groove at the periphery of the outsole.

This further contributes to the advantage that the intermediate component can expand into the outsole of the article. Thereby, when pressure is applied to the intermediate component, for instance due to the weight of the wearer, the intermediate component may provide for a softer cushioning, which is appreciated by the athlete during his or her exercise.

In a preferred embodiment of the article of footwear with one or more studs as described herein, the one or more apertures are arranged in a forefoot portion of the outsole.

The forefoot portion of the outsole may refer to the front portion of the outsole. The forefoot portion of the outsole shoe may cover an area of the foot corresponding to the toes and a base of the toes. In one example, the forefoot portion may constitute about the front half of the underfoot portion or about one third of the underfoot portion.

The article according to this embodiment improves cushioning in the forefoot portion of the foot of the wearer. This may be the case, because the forefoot portion of the outsole may play a significant role in providing comfort, fit, and / or functionality to the article. The forefoot portion of the outsole may be subject to a range of movements and / or pressures during athletic activities. Therefore, improvements to this forefoot portion of the outsole contributes to a more comfortable and supportive fit. Moreover, the overall performance of the article may thereby be enhanced.

In a preferred embodiment of the article of footwear with one or more studs as described herein, at least two of the apertures are spaced apart on opposing sides of a midline from heel to toe of the outsole.

Being spaced apart means that the at least two apertures have a distance from one another being substantially perpendicular to their longitudinal extension. The distance may be recognizable by the skilled person without any specific equipment.

This embodiment may have the advantage that other functional elements could be arranged between the at least two apertures, for instance one or more studs. In addition, a spacing between the apertures may improve the mechanical integrity of the outsole as an accumulation of apertures on one location may be prevented.

In a preferred embodiment of the article of footwear with one or more studs as described herein, the one or more apertures are at least partially connected with one or more beams, wherein the one or more beams are preferably one or more angled beams, having an angle of with respect to a heel to toe axis (HT) of at least 10°, preferably at least 20°, more preferably at least 30°, even more preferably at least 40°, most preferably at least 45°, and / or of at most 80°, preferably at most 70°, more preferably at most 60°, even more preferably at most 50°, most preferably at most 45°.

This has the advantage that the one or more apertures may be connected to one another, which could provide for additional stiffness. The one or more beams may allow the one or more apertures to open. Additionally, or alternatively, the one or more beams can provide a mechanical "lock" under certain load conditions. Without wishing to be bound by theory, it is believed that the beams may deform during opening of the one or more apertures, which could lead to a reorientation of the one or more beams. Such reorientation may be such that the one or more beams become mostly longitudinally aligned. This may provide more stability, especially when apertures are employed which have a greater length as seen along the heel to toe axis.

The one or more beams may comprise any material suitable for providing a certain "lock" function upon reaching a certain deformation and / or reorientation. In one example, the one or more beams may comprise a similar or substantially the same material as outsole, the intermediate component.

### Outsole with studs

In a preferred embodiment of the article of footwear with one or more studs as described herein, the one or more studs of the article of footwear are arranged on the outsole.

The studs may be arranged arbitrarily on the outsole. Alternatively, the studs may be arranged so as to follow a certain pattern that is designed such that traction to the ground can be improved. It may also be possible that the arrangement of the studs comprises one or more groups of studs that may be arranged arbitrarily and one or more groups of studs that may be arranged so as to follow a certain pattern that is designed such that traction to the ground can be improved. As understood, the arrangement of the one or more studs may vary depending on the type of ground for which the article of footwear is made to be used.

In a preferred embodiment of the article of footwear with one or more studs as described herein, the one or more apertures are arranged between two or more of studs.

This may improve traction to the ground due to the two or more studs. Further, arranging the apertures in proximity to the studs may improve the cushioning effect, as a relatively high pressure attributable to the studs can be compensated to a greater extent.

### Dimensions

In a preferred embodiment of the article of footwear with one or more studs as described herein, the one or more apertures have a length, preferably in a longitudinal direction of the outsole, of at least 1 cm, preferably at least 2 cm, more preferably at least 3 cm, even more preferably at least 4 cm, even more preferably at least 5 cm, even more preferably at least 7 cm, further more preferably at least 8 cm, further more preferably at least 9 cm, further more preferably at least 10 cm, further more preferably at least 12 cm, further more preferably at least 14 cm, most preferably of at least 15 cm, and /or of at most 25 cm, preferably at most 23 cm, more preferably at most 20 cm, even more preferably at most 18 cm, further more preferably at most 16 cm, most preferably of at most 15 cm.

With the lengths of the one or more apertures as specified in here, an optimal balance can be struck between sufficient cushioning, reducing a pressure arising from studs (large length would be desired), and sufficient support and / or mechanical integrity (low length would be desired).

As described elsewhere herein, the longitudinal direction of the outsole may be substantially parallel to a heel to toe axis.

In a preferred embodiment of the article of footwear with one or more studs as described herein, the intermediate component extends in an upward direction as seen from a bite line of the upper by a length of at least 2 mm, preferably at least 3 mm, more preferably at least 4 mm, even more preferably at least 5 mm, even more preferably at least 6 mm, even more preferably at least 8 mm, more preferably at least 10 mm, even more preferably at least 12 mm, further more preferably at least 15 mm, most preferably of at least 20 mm, and /or of at most 40 mm, preferably at most 35 mm, more preferably at most 30 mm, even more preferably at most 25 mm, most preferably of at most 20 mm.

The bite line of the upper may be the line where the top edge of the outsole lies on the upper. As an illustrative example, if one uses a pen and traces along the top edge of the outsole, this may indicate the bite line of the upper referred to herein.

The upward direction as used herein may be the direction from an underfoot portion of the upper to an upper portion of the upper. For instance, the upward direction may be the direction from the underfoot portion of the upper to an instep portion of the upper. The upward direction may be substantially parallel to a vertical axis as described elsewhere herein.

The intermediate component should extend to a sufficient amount in the upward direction such that the wearer can make use of the benefits thereof as described elsewhere herein. However, the intermediate component should not extend larger than necessary, as this would increase the weight of the article of footwear and / or increase the material usage unnecessarily.

Thus, without wishing to be bound by theory, it is believed that an optimal balance between these conflicting requirements can be struck according to the lengths as specified in here.

It is noted that in some examples, the extension of the intermediate component in the upward direction may vary for instance as seen along a heel to toe axis. For instance, the extension of the intermediate component in the upward direction may have a tapered shape as seen along a heel to toe axis. For instance, a bulk portion of the intermediate component may have a greater extension than an end portion of the intermediate component as seen along a heel to toe axis. However, any kind of arrangement are encompassed by the present disclosure.

In a preferred embodiment of the article of footwear with one or more studs as described herein, the intermediate component has a thickness of at most 5 mm, preferably at most 4 mm, even more preferably at most 3.5 mm, even more preferably at most 3 mm, even more preferably at most 2.5 mm, even more preferably at most 2 mm, even more preferably at most 1.5 mm, even more preferably at most 1 mm, even more preferably at most 0.8 mm, most preferably at most 0.5 mm.

This has the advantage that the intermediate component may not act and / or feel like a foreign part or object of the article of footwear. Rather, the intermediate component may be smoothly integrated to the upper, which is appreciated by the wearer. Further, material usage can thereby be reduced, which has economic and ecological advantages.

As understood, the thickness may be measured substantially perpendicular to a surface of the intermediate component, e.g., from an outer to an inner side of the article of footwear.

Further to the advantages of the thickness mentioned above, the intermediate component may comprise a varying thickness, which could contribute to the appearance of a tapered shape. By varying the thickness on the intermediate component, various different effects can be achieved in combination with the intermediate component. Thereby, the compression stiffness of the intermediate component and / or the tensile stiffness of the intermediate component may be influenced on the same intermediate component. In one example, a thinner intermediate component may have a higher density as compared to a thicker intermediate component. Thereby, the thinner intermediate component may be inherently stiffer in tension.

In a preferred embodiment of the article of footwear with one or more studs as described herein, the intermediate component comprises one or more ribs, wherein the one or more ribs are preferably arranged in a predefined pattern.

This has the advantage that the intermediate component can be provided with further functionalities and / or tailored to specific needs. As an example, the stiffness of the intermediate component may be adjusted and / or optimized by way of the one or more ribs.

The one or more ribs may be arranged in any arbitrary way. In one example, the ribs may be arranged substantially parallel to one another. The ribs may be arranged substantially along an upward direction of the article of footwear. The ribs may alternately or additionally be arranged obliquely with respect to the upward direction of the article of footwear.

One or more of the one or more ribs may have a slender and / or elongated shape. One or more of the one or more ribs may have a gentle curve. One or more of the one or more ribs may have a flat and / or somewhat cylindrical in cross-section. The shape of one or more of the one or more ribs may be designed so as to provide a specific functionality to the article of footwear.

In an exemplary and non-exhaustive list, the following shapes of ribs are encompassed by the present disclosure: rectangular ribs, i.e., ribs that are simple, straight, and rectangular in shape. They may be used to add stiffness and / or strength to the intermediate component. These ribs may be oriented in various directions to provide the desired structural support. Tapered ribs may be wider at one end and gradually narrow towards the other. They may be employed to distribute loads and / or to reinforce specific areas in the intermediate component while minimizing stress concentrations. Tapered ribs may be useful for reducing weight while maintaining structural integrity. Circular ribs are cylindrical and / or circular in shape. They may be employed in applications where rotational symmetry or even load distribution may be of importance. Lattice ribs comprise a network of intersecting bars and / or struts, forming a grid-like structure. They may be useful for providing strength and / or lightweight design. Web ribs may be used to add strength and / or stiffness. They are typically thin, elongated structures oriented perpendicular to a main load-carrying member. These ribs may help to resist bending and / or to resist torsional forces. Hollow ribs are ribs with internal voids and / or cavities. They may be useful when weight reduction is of importance but some structural support and / or stiffness to the intermediate component is still required. However, these examples are not limiting and, as understood by the skilled person, the specific shape of the one or more ribs as described in the present disclosure may depend on various factors such as the desired stiffness of the intermediate component, certain load-bearing requirements of the intermediate component, the material(s) that is / are employed for the intermediate component, or the like.

One or more of the one or more ribs may have any kind of length. For instance, one or more of the one or more ribs may have a length that extends over the overall intermediate component and / or over the overall intermediate component that is visible. One or more of the one or more ribs may have a length that extends over only a part of the intermediate component, such as over at most 90 %, at most 80 %, at most 70 %, at most 60 %, at most 50 %, at most 40 %, at most 30 %, at most 20 %, at most 10 % of the intermediate component and / or over at least 10 %, at least 20 %, at least 30 %, at least 40 %, at least 50 %, at least 60 %, at least 70 %, at least 80 %, at least 90 % of the intermediate component. The one or more ribs may be arranged equidistantly with respect to one another; however, different arrangements are certainly possible and not precluded.

In a preferred embodiment of the article of footwear with one or more studs as described herein, the intermediate component is at least partially visible from outside the article of footwear.

This may have the advantage that the outer appearance of the intermediate component could be adjusted so as to indicate the wearer that the part of the intermediate component that is visible has a certain functionality. Thereby, the wearer may adapt his or her performance accordingly. For instance, the wearer may try to hit a ball with said intermediate component rather than with another part of the upper that is not provided with this functionality.

Being at least partially visible may be understood such that during ordinary use of the article, for instance in a soccer game, a player may recognize the intermediate component without significant investigation of the article of footwear.

### Materials / manufacturing

In a preferred embodiment of the article of footwear with one or more studs as described herein, the intermediate component comprises a polymeric foam, in particular at least one of polyurethane (PU) foam, thermoplastic polyurethane (TPU) foam, polyamide (PA) foam, polyether-block-amide (PEBA) foam, thermoplastic polyester ether elastomer (TPEE) foam, wherein the intermediate component preferably comprises a homogeneous foam material, wherein the intermediate component optionally comprises a lattice structure, wherein the intermediate component is optionally made by an additive manufacturing process, such as a 3D printing process.

These materials are easy to procure, cost-effective, and widely accepted in the sector of articles of footwear. Moreover, depending on the desired degree of cushioning, providing a natural expanding of the foot, support, stability and / or integrity, a softer or harder material may be used. This allows to fine-tune the response of the intermediate component to a pressure load, e.g., from the ground, and / or to a ball contact on the upper. It may also be possible that the choice of the material for the intermediate component is subject to the material of the upper and / or of the outsole. This may have an advantage with respect to attachment.

Polyurethane foam may be a versatile material that offers several advantages due to its capability in providing comfort, cushioning, insulation and because it is relatively lightweight.

Polyamide foam may also be known as nylon foam. It is a type of foam material made from polyamide polymers. Polyamide foam is lightweight, allows for good cushioning and comfort, can have a high durability, exhibits improved chemical resistance, is customizable in its composition and may be adjusted such that it has a relatively low water absorption. This makes it suitable in applications where moisture resistance may be important. This could be advantageous for various athletic activities.

The lattice structure as referred to in the present disclosure may refer to a lattice-like pattern or structure. This lattice pattern may be characterized by a network of interconnected elements, often resembling a grid, honeycomb, and / or other geometric shapes. The lattice structure as referred to in the present disclosure can be made from various materials, including plastics, metals, and / or even 3D-printed polymers. They serve several purposes including one or more or all of the following non-exhaustive list: Lattice structures can provide structural support and stability to different parts of the article of footwear, in particular the intermediate component as described in here. Lattice structures may help to distribute forces and impact more evenly, enhancing comfort and reducing the risk of injury. Lattice structures may be lightweight due to their open structure, making them suitable for reducing the overall weight of the article of footwear. This can be especially important in athletic and performance footwear. Lattice structures can be designed to absorb shock and provide cushioning, enhancing comfort and impact protection. The open nature of lattice structures allows for improved airflow and breathability within the overall article of footwear, not only in the intermediate component. This can help regulate temperature and moisture, reducing discomfort. Lattice structures may be used for customization purposes. They may allow users to adjust the tightness or support level in specific areas of the intermediate component by modifying or replacing lattice elements. Lattice structures can also be incorporated into the intermediate component for a unique and visually appealing appearance. They offer designers the opportunity to create distinctive patterns and textures.

As also further described in detail below, the intermediate component can be made using additive manufacturing process (e.g., 3d-printing- or deposition techniques), which generally involve controlling both a fill- or feeding rate with which material is supplied to a "printing head" of an additive manufacturing device, as well as a composition of the material used for the additive build-up process of the intermediate component.

Additive manufacturing processes allow for a fine-tuned control of the general geometry of the intermediate component, which can play an important role in providing the desired advantages described in here. Moreover, additive manufacturing processes allow the production of parts, such as the intermediate component described in here in a very short timeframe and on-site, such that the product development process is not stopped (at least not for a very long period of time) by having to wait for the manufacture or re-manufacture / adaption of the manufacturing tools, which conventionally often delay the manufacturing processes by days or even weeks.

Designing the intermediate component for additive manufacture can involve one or several options and methods, wherein combinations are, of course, also possible. The simplest case would be a simple trial-and-error approach, which can be feasible due to the short time it takes from providing the design of the intermediate component until the finished intermediate component is produced, due to the fact that additive manufacturing is used. A second approach is to use computer simulations of an intermediate component, which is to be provided.

The 3D printing process has the further advantage that all the functions described herein can be achieved through substantially one engineered piece.

It is noted that the intermediate component can comprises both, i.e., a polymeric foam and / or a lattice structure. This has the benefit that the advantages described herein of the polymeric foam and the lattice structure can be combined. In one example, the intermediate component is a foam component, in particular a polymeric foam component. In another example, the intermediate component is a lattice structure.

In a preferred embodiment of the article of footwear with one or more studs as described herein, the intermediate component comprises a material having a lower tensile strength compared to the outsole.

The tensile strength is a mechanical property that measures the maximum amount of tensile (pulling) force a material can withstand substantially without breaking and / or without substantially experiencing permanent deformation. In an illustrative example, the tensile strength may be the maximum amount of stretching or pulling force that a material can endure before it fails. In one example, the intermediate component comprises a material that is softer than the material of the outsole.

This has the advantage that the foam can deform under a pressure load, while the outsole can provide for the mechanical integrity of the article of footwear.

It is particularly preferred when the intermediate component comprises or consists of a bead foam. One such example of a bead foam is the eTPU bead foam described in EP 2 649 896. This foam is known for its exceptional comfort, energy return, and performance characteristics. It was marketed in 2013 and has inter alia the following key features and benefits: high energy return, high cushioning, high durability, substantially temperature independent behavior. Such foam technology is recognizable by its distinctive appearance, with a plurality, e.g., thousands of substantially small energy capsules (also referred to as TPU pellets) compressed together to form a part, such as a foam midsole and / or an intermediate component as described in here. These capsules compress and expand in response to impact, providing the cushioning and energy return that wearers feel.

It is particularly preferred when the intermediate component comprises or consists of a supercritical foam. Such a foam may be provided by a supercritical fluid, i.e., a liquid with a temperature and pressure above the critical point. The basic principle of microporous foaming of supercritical fluid may be to take advantage of the dependence of gas solubility in a polymer on pressure and temperature. Thereby, the polymer may enter a thermodynamic unstable state in a cooling process, then a formation of a gas core may be induced, following by the formation of a microporous structure. Supercritical foaming is an effective method of preparing microporous components. Any kind of polymer may be used for such a supercritical foam, such as EVA and / or TPU.

In a preferred embodiment of the article of footwear with one or more studs as described herein, the intermediate component is provided to the upper by means of injection or stock-fitting.

### Further aspect

In a second aspect of the present disclosure, the objects are solved by an article of footwear with one or more studs, in particular a sports shoe, such as a soccer shoe, the article of footwear comprising: an upper; an intermediate component; and an outsole; wherein the outsole comprises one or more apertures, configured to allow the intermediate component to expand at least partially into the outsole.

In a preferred embodiment of the article of footwear with one or more studs as described herein, the article of footwear is the article of footwear of any one of the preceding embodiments described herein. For instance, the article of footwear has one or more features of any one of the preceding embodiments described herein.

Thereby, any one or more of the embodiments, features, advantages, examples or the like as described herein with reference to the first aspect may be combined with the second aspect as described herein and vice versa.

In particular, it goes without saying that the technical properties shown or described for the article of footwear with one or more studs of the first aspect, the advantages and the improvements over the state of the art are likewise applicable to the article of footwear with one or more studs of the second aspect and vice versa.

In a preferred embodiment of the article of footwear with one or more studs as described herein, the article of footwear is one of a soccer shoe, a rugby shoe, an American football shoe or a golf shoe.

### 4. Brief description of the figures

In the following, the invention will be described in more detail with reference to the following figures:
- Fig. 1:: shows an exemplary article of footwear with one or more studs, in particular a sports shoe, according to an embodiment of the present disclosure.
- Fig. 2:: shows the embodiment of Fig. 1 in a different perspective.
- Fig. 3:: shows an exemplary schematic article of footwear with one or more studs, in particular a sports shoe, according to an embodiment of the present disclosure.
- Fig. 3A:: shows the embodiment of Fig. 3 in a different perspective.
- Fig. 3B:: shows the embodiment of Fig. 3 and Fig. 3A in a different perspective.
- Fig. 4:: shows an exemplary schematic article of footwear with one or more studs, in particular a sports shoe, according to an embodiment of the present disclosure.
- Fig. 5:: shows an exemplary schematic article of footwear with one or more studs, in particular a sports shoe, according to an embodiment of the present disclosure.
- Fig. 6:: shows an exemplary article of footwear with one or more studs, in particular a sports shoe, according to an embodiment of the present disclosure in a perspective view.
- Fig. 7:: shows an exemplary article of footwear with one or more studs, in particular a sports shoe, according to the embodiment of Fig. 6 from a medial side view.
- Fig. 8:: shows an exemplary article of footwear with one or more studs, in particular a sports shoe, according to the embodiment of Fig. 6 and Fig. 7 from a lateral side view.
- Fig. 9:: shows an exemplary article of footwear with one or more studs, in particular a sports shoe, according to an embodiment of the present disclosure.
- Fig. 10:: shows an exemplary article of footwear with one or more studs, in particular a sports shoe, according to an embodiment of the present disclosure.
- Fig. 11:: shows an exemplary article of footwear with one or more studs, in particular a sports shoe, according to an embodiment of the present disclosure.
- Fig. 11A:: shows the embodiment of Fig. 11 in a different perspective.

### 5. Detailed description of the preferred embodiments

In the following only some possible embodiments of the invention are described in detail. However, the present invention is not limited to these, and a multitude of other embodiments are applicable without departing from the scope of the invention. The presented embodiments can be modified in a number of ways and combined with each other whenever compatible and certain features may be omitted in so far as they appear dispensable. In particular, the disclosed embodiments may be modified by combining certain features of one embodiment with one or more features of another embodiment.

It is to be understood that not all features of the described aspects / embodiments have to be present for realizing the technical advantages provided by the present disclosure, which is defined by the subject-matter of the claims. The disclosed aspects / embodiments may be modified by combining certain features of one aspect / embodiment with one or more features of another aspect / embodiment. Specifically, the skilled person will understand that features, and / or functional elements of one aspect / embodiment can be combined with technically compatible features, and / or functional elements of any other aspect / embodiment of the present disclosure given that the resulting combination falls within the definition of the present disclosure.

While the embodiments below are described primarily with reference to an article of footwear, in particular a sports shoe, the skilled person will recognize that the disclosure according to the invention can equally be applied in a plurality of different technical fields and / or use cases.

Throughout the present figures and specification, the same reference numerals refer to the same elements. For the sake of clarity and conciseness, certain features, parts, elements, aspects, components and / or steps of certain embodiments are presented without undue detail where such detail would be apparent to the skilled person in the art in light of the teachings herein and / or where such detail would obfuscate an understanding of more pertinent aspects of the embodiments.

As understood by the skilled person and / or in order to avoid redundancies, reference is also made to the explanations in the preceding sections, which also apply to the following detailed description. Further, not all features, parts, elements, aspects, components and / or steps are expressly indicated by reference signs for the sake of brevity and clarity. This particularly applies, where the skilled person recognizes that such features, parts, elements, aspects, components and / or steps are present in a plurality.

### Definitions

The "foam", for instance as used in conjunction with the component as described herein may be any substance that is created when gas becomes trapped in a material, such as a liquid or solid, resulting in a mass of small, substantially interconnected gas bubbles within the material. The foam may be light and may have an airy texture. Further, the foam may be characterized by its ability to absorb and / or cushion impacts.

The "toe portion" as used herein may comprise portions in proximity of the big toe, and / or of the big toe knuckle.

The "midfoot lateral side portion" as used herein may comprise portions of the upper that covers the outer side of the midfoot area.

The "medial side portion" of the upper as used herein may refer to the inner side of the upper, which may be the side that faces toward the center of the wearer, when the article is worn.

The "lateral side portion" of the upper as used herein may refer to the outer side of the upper, which may be the side that faces away from the center of the wearer, when the article is worn.

Unless otherwise stated, the term "substantial" or "substantially" as used in the present context may be understood to a great or significant extent or for the most part or essentially. In particular, manufacturing tolerances are included by this term.

The term "and / or" is only an association relationship describing associated objects and represents that three relationships may exist. For example, A and / or B may represent three conditions: i.e., independent existence of A, existence of both A and B and independent existence of B. In addition, the character "/" in the disclosure usually represents that previous and next associated objects form an "or" relationship.

The terms "bottom", "top", "one end", "the other end", "outer side", "upper", "above", "inner side", "under", "below", "horizontal", "coaxial", "central", "end" "part", "length", "outer end" etc., which indicate the orientation or positional relationship, are based on the orientation or positional relationship shown in the drawings.

The terms "upper", "above", "below", "under" and the like as used in the present invention to indicate a relative position in space are used for the purpose of facilitating explanation to describe an article of footwear, an element, a part, an object and / or a feature shown in the drawings relative to the relationship of another article of footwear, element, part, object and / or feature.

### Description of figures

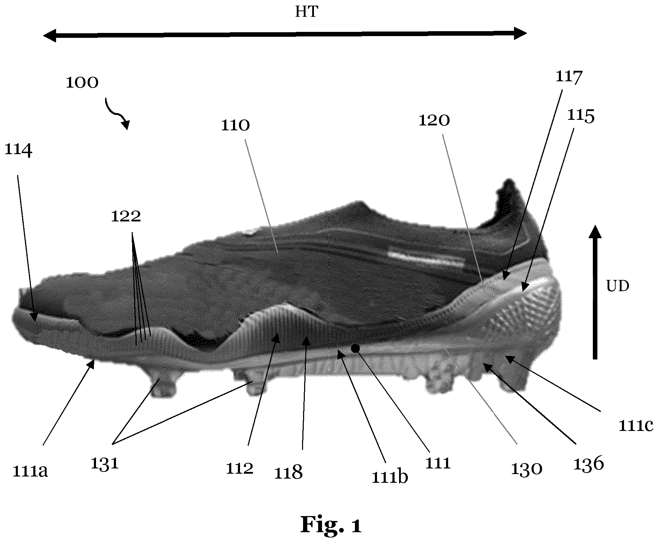

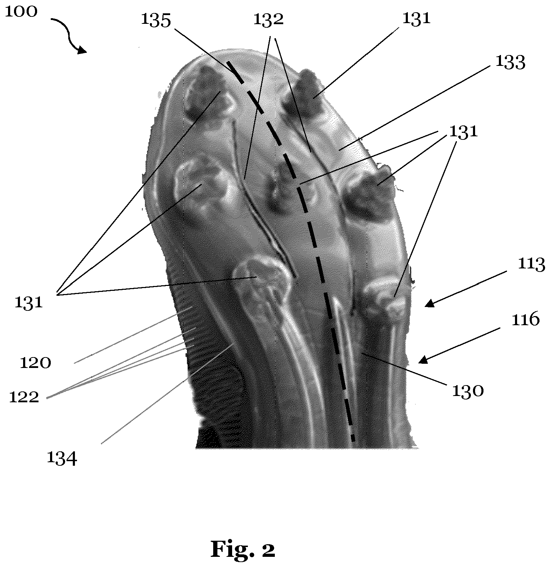

**Fig. 1** and **Fig. 2** show an exemplary article of footwear 100 with one or more studs, in particular a sports shoe, according to an embodiment of the present disclosure in two different perspectives. Fig. 1 shows the article of footwear 100 from a lateral perspective and Fig. 2 shows the article of footwear 100 from the bottom.

The article of footwear 100 of the first aspect comprises an upper 110 and an intermediate component 120 configured to act as a cushioning component. The intermediate component 120 is arranged in an underfoot portion 111 of the article of footwear 100 and extends at least partially to a medial side portion 112 and / or to a lateral side portion 113 of the upper 110.

As also indicated in these figures, the article of footwear 100 of the second aspect comprises an upper 110, an intermediate component 120, and an outsole 130. The outsole 130 comprises one or more apertures 132, configured to allow the intermediate component 120 to expand at least partially into the outsole 130.

As described elsewhere herein, the article of footwear 100 of the first aspect and the article of footwear 100 of the second aspect are fully compatible with one another and features and advantages described with reference to the first aspect are also applicable to the second aspect and vice versa. For brevity, no distinction between the aspects is made in the following.

It is noted that the intermediate component 120 can contribute to a more comfortable sensation to the wearer. Such a comfortable sensation can improve the athletic performance of the wearer as the wearer is less distracted by any annoying rigid elements comprised by the article of footwear 100. The skilled person understands that certain sensations are generally considered more comfortable for most people and are not necessarily dependent on an individual experience. Some exemplary sensations that tend to contribute to comfort are the following: Cushioning, e.g., a sensation of gentle support and cushioning is often perceived as comfortable, especially in areas where pressure is applied. Softness, i.e., providing a gentle touch against the skin of the wearer. Breathability, e.g., allowance for air circulation and moisture wicking which can reduce overheating and sweat accumulation. Flexibility, e.g., providing for natural movement of the foot of the wearer without restriction. This may be important during athletic activities that involve bending or stretching. Proper fit, e.g., providing for an intermediate component that conforms to the shape of the foot of the wearer without being too tight or too loose. In addition, a proper fit may ensure that pressure points are generally minimized, as the surface area that contacts the foot of the wearer can be increased. Smooth seams and surfaces, e.g., providing for smooth surfaces that come into direct contact with the skin can prevent irritation and discomfort. Support, e.g., providing for an adequate support for the weight of the body of the wearer. In particular, an arch support in the upper may be improved.

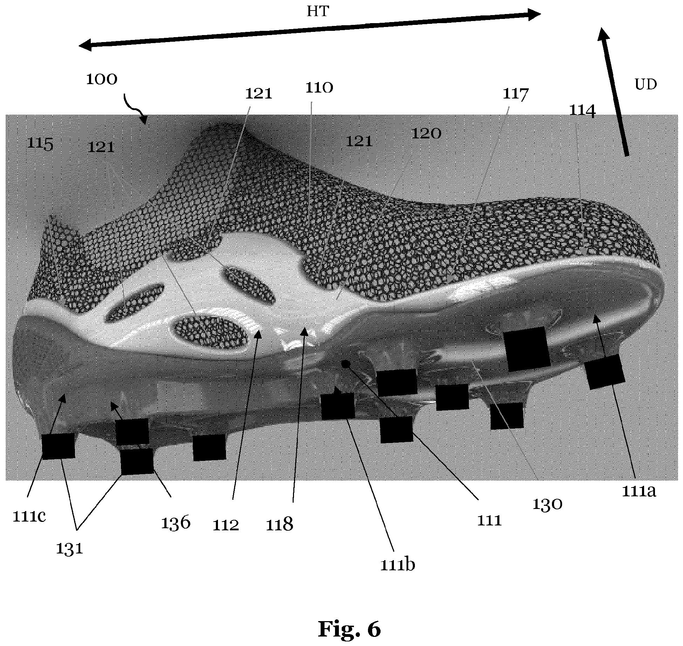

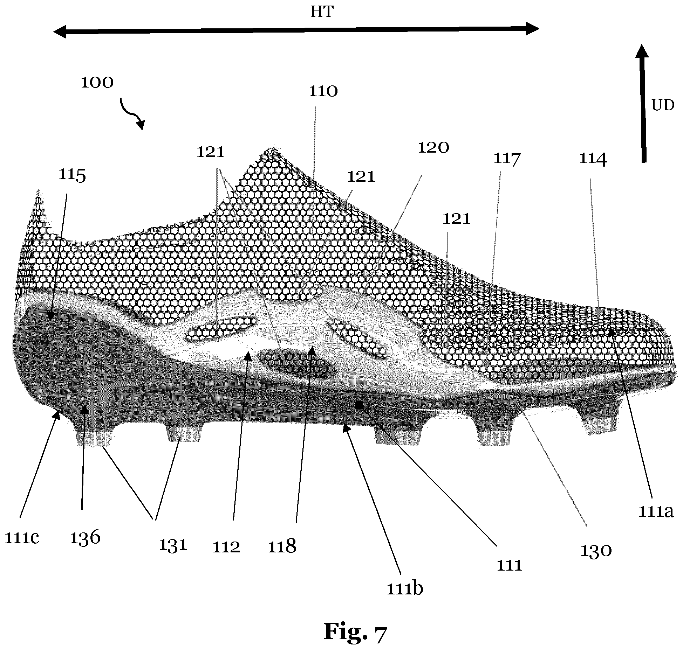

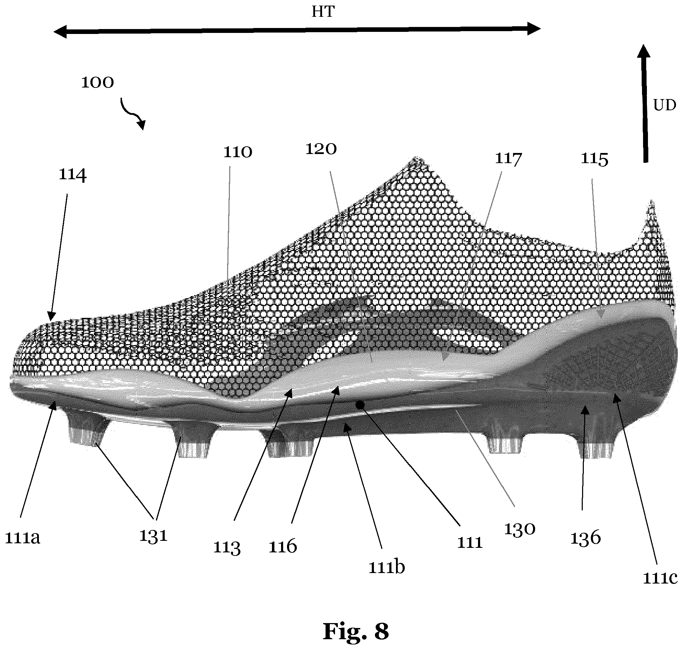

As can be seen in Figs. 1 and 2, the intermediate component 120 can wrap the upper 110 at least partially. In particular, the intermediate component 120 can wrap at least one of a toe portion 114, a medial side portion 112, a heel portion 115, or a lateral side portion 113 (as indicated in Fig. 2), in particular a midfoot lateral side portion 116 (as depicted in Fig. 2 and as further derivable from Fig. 8) of the upper 110 at least partially. However, additionally or alternatively an arrangement where the intermediate component 120 wraps a midfoot medial side portion 118 of the upper 110 at least partially is advantageous (as indicated in Fig. 1 and as further derivable from Fig. 6 and Fig. 7).

In the article of footwear 100, the intermediate component 120 can wrap a complete periphery 117 of the upper 100. It is noted that in some examples, the periphery 117 of the upper 100 may be covering a strobel or moccasin of the upper 110.

The underfoot portion 111 of the upper 110 comprises a forefoot portion 111a, a midfoot portion 111b, and a rearfoot portion 111c of the upper 110.

The intermediate component 120 covers at least 50 %, preferably at least 60 %, more preferably at least 70 %, even more preferably at least 80 %, further more preferably at least 90 %, further more preferably at least 95 %, most preferably 100 % of the underfoot portion 111.

The article of footwear 100 further comprises an outsole 130 arranged below the intermediate component 120.

As best seen in Fig. 2, in the article of footwear 100, the outsole 130 comprises one or more apertures 132 configured to allow the intermediate component 120 to expand at least partially into the outsole 130. Such an expansion of the intermediate component 120 may be understood such that the intermediate component is allowed to deform into the outsole 130 at least partially. Such expansion / deformation may occur due to a pressure load acting on the intermediate component 120 due to the weight of the wearer and the corresponding force from the ground. The intermediate component 120 may expand into various directions, however, it mostly expands into a downward direction (parallel to the upward direction UD as shown in Fig. 1). Since the outsole 130 may physically hinder and / or limit the expansion of the intermediate component 120, it is advantageous to provide for the apertures 132 such that the intermediate component 120 can expand therein, which can provide an improved cushioning to the wearer.

During many athletic activities, a plurality of different movement patterns may be executed by an athlete, including but not limited to the foot of the wearing contacting the ground via a posterior heel strike, a medial heel strike, a lateral heel strike or a medial forefoot strike. These different impact patterns may result, among other things, in an ankle inversion, an ankle eversion, ankle plantarflexion, ankle dorsiflexion. To facilitate fast execution of such movements, the outsole 130 should provide for improved grip on the ground, and it should also relieve the musculoskeletal system from at least a part of the strain resulting from these movements. This necessitates a high degree of stability of the article of footwear 100, so that the article of footwear 100 doesn't lose its integrity or break out under the impact of such strong forces. The skilled person may understand that the term "break out" means that the article of footwear 100 fails to provide the necessary lateral support to the musculoskeletal system to prevent the ankle from hyperextending in a lateral direction.

On the other hand, during such a plurality of different movement patterns executed by the athlete, it is still necessary to provide a cushioning effect for the foot to improve the athlete's performance. The apertures 132 arranged in the outsole 130 in combination with the intermediate component 120 can provide for both needs.

As can be seen from Fig. 2, two apertures 132 are depicted. However, the article of footwear 100 and, in particular, the outsole 130 may have more or less than two apertures 132.

As can be gathered from Fig. 2, the one or more apertures 132 have an elongated shape, preferably a shape of one of slits, grooves, cuts, or vents. As noted elsewhere herein, these shapes of the apertures 132 further contribute to the advantage that the intermediate component 120 can expand into the outsole 130 of the article of footwear 100 at least partially. Thereby, when pressure is applied to the intermediate component 120, for instance due to the weight of the wearer, the intermediate component 120 may provide for a softer cushioning, which is appreciated by the athlete performing his or her exercise. In addition, the specific shapes may be described as follows and have the following advantages:
A slit may be a rather long, narrow opening and / or a cut in a material, such as a material of the outsole 130 as described herein. A slit typically has a length that is greater than its width, in some instances its length is significantly greater than is width. For instance, its length may be greater than its width by a factor of at least two, at least three, at least four, at least five, at least six, at least seven, at least eight, at least nine, at least ten or even greater. Slits can be straight or curved and they can be composed of one or more straight segments and one or more curved segments. The segments can be arbitrarily arranged along a line or in an alternating manner along a line. Slits may be used to allow passage or flow of air, light, or other substances therebetween. In addition, the slits may provide for additional functionalities, they may contribute to the outer appearance.

A groove may be a long, narrow channel and / or recessed portion, which may be cut into a material, such as a material of the outsole 130 as described herein.

The grooves may be useful for various purposes, such as guiding the flow of liquids, or the like. This may aid in removing moisture resulting from sweat or the like. In turn this can also improve odor. The grooves can be shallow and / or deep. As understood by the skilled person, this may depend on the thickness of the outsole 130. The grooves may be wide or narrow. The grooves may appear in a variety of shapes, including one or more of straight segments, curved segments, corner segments, regular segments, or irregular segments. The segments can be arbitrarily arranged along the longitudinal direction of the groove or in an alternating manner along the longitudinal direction of the grove.

A cut may refer to a separation or division made in a material, such as a material of the outsole 130 as described herein. A cut may be provided by applying a sharp edge or tool into the material. Cuts may be straight or angled and can be used for a wide range of purposes, including creating openings, shaping materials, or altering the structure of an object, such as the outsole 130. The cuts may appear in a variety of shapes, including one or more of straight segments, curved segments, corner segments, regular segments, or irregular segments. The segments can be arbitrarily arranged along the longitudinal direction of the cut or in an alternating manner along the longitudinal direction of the cut.

A vent is an opening or passage in a material, such as a material of the outsole 130 as described herein. A vent may allow for the movement of gases, such as air, or liquids therethrough. Vents may be useful in regulating a temperature of the foot of the wearer. The vents may be implemented by various different shapes and / or size sizes, including one or more of straight segments, curved segments, corner segments, regular segments, or irregular segments. The segments can be arbitrarily arranged along the longitudinal direction of the vent or in an alternating manner along the longitudinal direction of the vent.

Further, the one or more apertures 132 can define through holes. In this manner, the one or more apertures 132 form a free space through the material of the outsole 130.

As best seen in Fig. 2, the one or more apertures 132 extend in a longitudinal direction of the outsole 130. The longitudinal direction of the outsole 130 may be substantially parallel to a heel to toe axis HT (as shown in Fig. 1). Further, the one or more apertures 132 have a closed boundary. In particular, the one or more apertures 132 are within the outer boundary of the outsole 130, also referred to as the periphery 134 of the outsole 130. In one example, the periphery 134 of the outsole 130 may substantially coincide with the bite line of the upper 110 as described elsewhere herein.

Further, the one or more apertures 132 are arranged in a forefoot portion 133 of the outsole 130.

Moreover, at least two of the apertures 132 are spaced apart on opposing sides of a midline 135 from heel to toe of the outsole 130. As can be seen in Fig. 2, the midline 135 may be parallel to the heel to toe axis HT of the upper 110.

Further, the one or more studs 132 of the article of footwear 100 are arranged on the outsole 130.

As best seen in Fig. 2, the outsole 130 comprises at least one stud 131 arranged in a forefoot portion 133 of the outsole 130. It is noted that the studs 131 depicted throughout the figures of the present disclosure are merely of schematic nature. In particular, Fig. 2 shows seven studs 131 arranged in the forefoot portion 133 of the outsole 130. Fig. 1 shows that the outsole 130 comprises at least one stud 131 arranged in a rearfoot portion 136 of the outsole 130. In particular, Fig. 1 shows four studs 131 arranged in the rearfoot portion 136 of the outsole 130. However, as understood by the skilled person, different arrangements of the one or more studs 131 are encompassed by the present disclosure. For instance, one or more studs 131 may be arranged in a midfoot portion of the outsole 130. It is advantageous that the intermediate component 120 is provided between the one or more studs 131 and a foot of a wearer, e.g., that the intermediate component 120 is sandwiched between the one or more studs 131 and a foot of a wearer, so as to provide for a cushioning effect.

The one or more studs 131 according to the embodiments of the present disclosure, which may be also referred to as cleats, may serve to provide traction for the wearer grounds, in particular on soft grounds such as grass fields. In various embodiments, the one or more studs 131 can be integrally formed with the outsole 130. In some embodiments, the one or more studs 131 may be at least partially injected onto a base material of the outsole 130. For instance, the tips of the one or more studs 131 may be injected into said base material. In various embodiments, a base material of the outsole 130 may be at least partially injected onto the tips of the one or more studs 131. In various embodiments, prefabricated tips of the one or more studs 131 are placed in a mold and are over-injected with a base material. In various embodiments, the one or more studs 131 may comprise TPU. Integrally formed or injected one or more studs 131 may eliminate the need to screw on and / or replace the one or more studs 131. However, interchangeable one or more studs 131 or screw-on one or more studs 131 can additionally or alternatively be used. In various embodiments, different lengths and / or different materials can be used for the one or more studs 131 to suit different ground conditions.

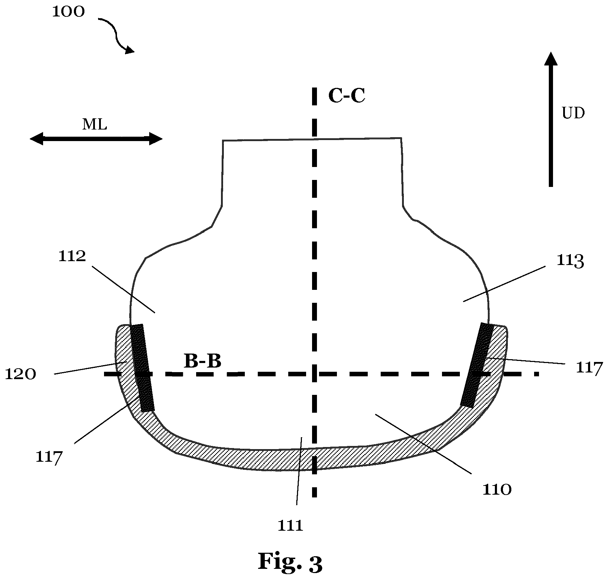

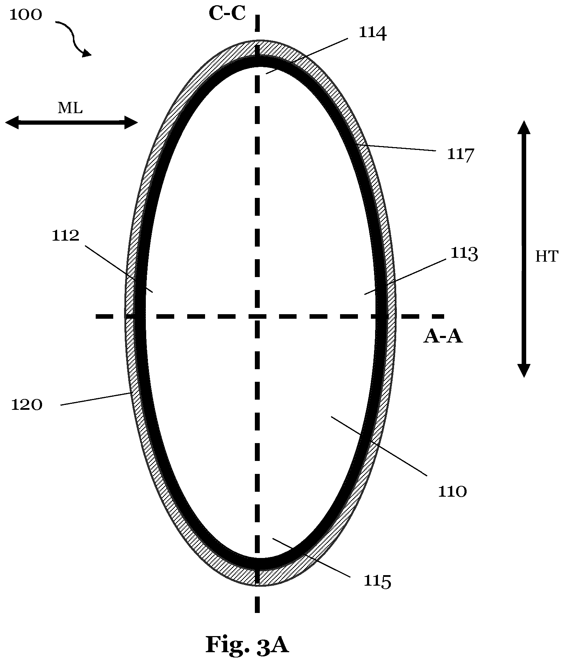

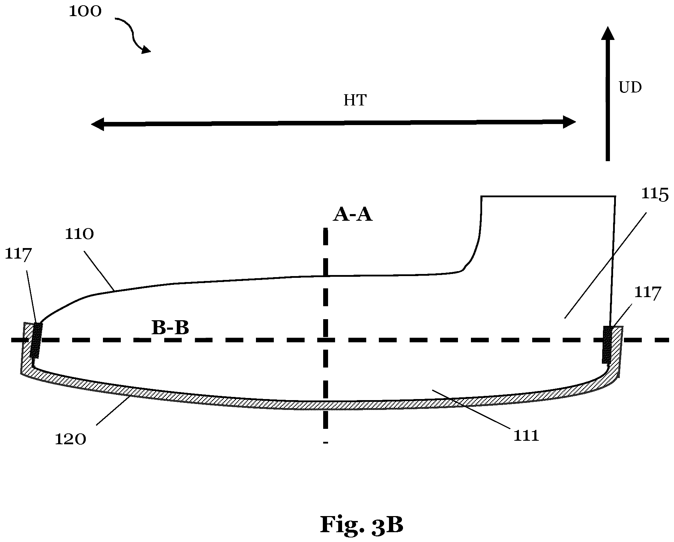

It is noted that the forefoot portion 133 of the outsole 130 may encompass a similar portion as the forefoot portion 111a of the upper 110 in a plane (similar to a horizontal plane) defined by a heel to toe axis HT and a medial to lateral axis ML (as shown in Fig. 3) of the article of footwear 100, which could, however, slightly deviate along the upward direction UD. That is, because the outsole 130 is arranged below the upper 110.

As best seen in Fig. 2, the one or more apertures 132 are arranged between two or more of studs 131.

The one or more apertures 132 have a length, preferably in a longitudinal direction of the outsole 130, such as along the heel to toe axis HT, of at least 1 cm, preferably at least 2 cm, more preferably at least 4 cm, even more preferably at least 6 cm, further more preferably at least 7 cm, further more preferably at least 8 cm, further more preferably at least 10 cm, further more preferably at least 12 cm, further more preferably at least 14 cm, most preferably of at least 15 cm, and /or of at most 25 cm, preferably at most 23 cm, more preferably at most 20 cm, even more preferably at most 18 cm, further more preferably at most 16 cm, most preferably of at most 15 cm.

As best seen in Fig. 1, the intermediate component 120 extends in an upward direction UD as seen from a bite line of the upper 110 by a length of at least 5 mm, preferably at least 8 mm, more preferably at least 10 mm, even more preferably at least 12 mm, further more preferably at least 15 mm, most preferably of at least 20 mm, and /or of at most 40 mm, preferably at most 35 mm, more preferably at most 30 mm, even more preferably at most 25 mm, most preferably of at most 20 mm. In some examples, the length to which the intermediate component 120 extends in the upward direction UD as seen from the bite line of the upper 110 varies along a lateral side portion 113 and / or a medial side portion 112 of the upper 110. For instance, Fig. 1 shows that the length of the intermediate component 120 in a midfoot medial side portion 118 can be greater than the length of the intermediate component 120 in the toe portion 114 of the upper 110 and / or in the heel portion 115 of the upper 110.

The intermediate component 120 can have a thickness of at most 5 mm, preferably at most 4 mm, more preferably at most 3 mm, even more preferably at most 2 mm, most preferably at most 1 mm.

As can be further seen in Fig. 1 and Fig. 2, the intermediate component 120 comprises one or more ribs 122, wherein the one or more ribs 122 are preferably arranged in a predefined pattern. As described elsewhere herein in greater detail, the one or more ribs 122 aid in that the intermediate component 120 can be imparted with further functionalities and / or in that the intermediate component 120 can be tailored to specific needs.

The one or more ribs 122 may be arranged in any arbitrary way. In one example, the ribs may be arranged substantially parallel to one another. The ribs 122 may be arranged substantially along an upward direction UD of the article of footwear 100. The ribs 122 may alternately or additionally be arranged obliquely with respect to the upward direction UD of the article of footwear 100. In Fig. 1, four of the one or more ribs 122 are indicated for brevity only. The one or more ribs 122 in Fig. 1 are arranged substantially parallel to the upward direction UD. In Fig. 2, three of the one or more ribs 122 are indicated for brevity only. The one or more ribs 122 may have any desired height, the height being measured in the direction of protrusion of the ribs 122. For instance, the height may be substantially perpendicular to the surface of the intermediate component 120.

As can be further seen in Fig. 1 and Fig. 2, the intermediate component 120 is at least partially visible from outside the article of footwear 100.

**Fig. 3****,** **Fig. 3A****,** and **Fig. 3B** show an exemplary schematic article of footwear 100 with one or more studs, in particular a sports shoe, according to an embodiment of the present disclosure in three different perspectives. The features shown in these figures are applicable to all other embodiments of the article of footwear 100 described elsewhere herein. For brevity, not all features of the article of footwear 100 are provided with reference signs. Further, it is noted that the outsole 130 is not shown in these figures.

Fig. 3 shows the embodiment of the article of footwear 100 in a cross-sectional cut **A-A** (as indicated in Figs. 3A and 3B) through the midfoot of the upper 110, the cross-sectional cut being perpendicular to the heel to toe axis HT. Fig. 3A shows the embodiment of the article of footwear 100 in a cross-sectional cut **B-B** (as indicated in Figs. 3 and 3B) through the upper 110, the cross-sectional cut being perpendicular to the upward direction UD (also referred to as the vertical axis during ordinary use of the article of footwear 100). Fig. 3B shows the embodiment of the article of footwear 100 in a cross-sectional cut **C-C** (as indicated in Figs. 3 and 3A) through the upper 110, the cross-sectional cut being perpendicular to the medial to lateral axis ML.

Figs. 3, 3A, and 3B show that the intermediate component 120 can wrap a complete **periphery** 117 of the upper 110. The periphery 117 of the upper 110 is drawn as a thick bold line for illustrative purposes only in order to simplify and understanding thereof. It does not necessarily mean that the periphery 117 of the upper 110 is such a thick bold line as shown in this schematic figure. Same applies to the thickness of the intermediate component 120, which can be thinner or thicker than depicted, preferably it may be thinner than depicted. Further, same applies to the length of the intermediate component 120 by which it extends in the upward direction UD.

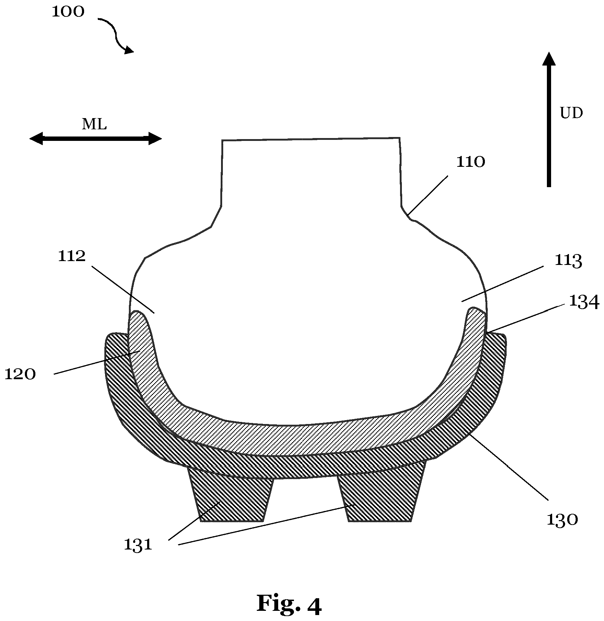

**Fig. 4** shows an exemplary schematic article of footwear 100 with one or more studs 131, in particular a sports shoe, according to an embodiment of the present disclosure. This embodiment corresponds to the remaining embodiments described herein and mostly differences are described for brevity, but also common features are presented.

As can be seen in this figure, the intermediate component 120 is arranged inside the upper 110, preferably as an innermost layer so as to contact a foot of a wearer at least partially when the article of footwear 100 is worn. In particular, the embodiment shown in Fig. 4 has the following arrangement of layers as seen from the outside to the inside of the article of footwear 100: the outsole 130, followed by the upper 110, followed by the intermediate component 120. In other words, the upper 110 is substantially sandwiched between the intermediate component 120 and the outsole 130. It may be possible that the article of footwear 100 comprises further layers for providing further functionalities.

As can be seen in Fig. 4, the intermediate component 120 may directly contact the complete underfoot of the wearer during ordinary usage. Further, the intermediate component 120 may contact the medial side, the toe portion, the lateral side, and / or the heel portion of the foot of the wearer at least partially during ordinary usage.

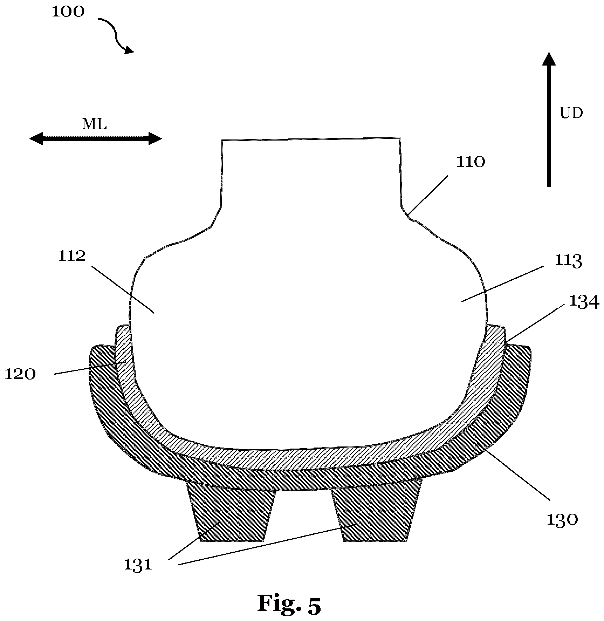

**Fig. 5** shows an exemplary schematic article of footwear 100 with one or more studs 131, in particular a sports shoe, according to an embodiment of the present disclosure. This embodiment corresponds to the remaining embodiments described herein and mostly differences are described for brevity, but also common features are presented.

As can be seen in this figure, the intermediate component 120 is arranged outside the upper 110. In particular, the embodiment shown in Fig. 5 has the following arrangement of layers as seen from the outside to the inside of the article of footwear 100: the outsole 130, followed by the intermediate component 120, followed by the upper 110. In other words, the intermediate component 120 is substantially sandwiched between the upper 110 and the outsole 130. It may be possible that the article of footwear 100 comprises further layers for providing further functionalities.

**Fig. 6** shows an exemplary article of footwear 100 with one or more studs 131, in particular a sports shoe, according to an embodiment of the present disclosure in a perspective view. **Fig. 7** shows an exemplary article of footwear 100 with one or more studs 131, in particular a sports shoe, according to the embodiment of Fig. 6 from a medial side view. **Fig. 8** shows an exemplary article of footwear 100 with one or more studs 131, in particular a sports shoe, according to the embodiment of Fig. 6 and Fig. 7 from a lateral side view. The features shown in these figures are applicable to all other embodiments of the article of footwear 100 described elsewhere herein. For brevity, not all features of the article of footwear 100 are provided with reference signs. This embodiment corresponds to the remaining embodiments described herein and mostly differences are described for brevity, but also common features are presented.

The intermediate component 120 of the article of footwear 100 with one or more studs 131 comprises one or more openings 121. The one or more openings 121 may be arranged in a medial side portion 112 of the upper 110, in particular a midfoot medial side portion 118 of the upper 110.

The one or more openings 121 of the intermediate component 120 may be implemented in various ways as described elsewhere herein. In this particular example, the one or more openings 121 of the intermediate component 120 are through holes, that go through the material of the intermediate component 120. This may further contribute to an enhanced damping effect of the intermediate component 121 as described elsewhere herein. As can be seen in particular in Fig. 6 and Fig. 7, some of the one or more openings 121 have a closed boundary (which is described elsewhere herein in greater detail). In this example, three openings 121 are shown, which have a closed boundary. Further, two openings 121 are shown which have a boundary that is open to the environment (which is described elsewhere herein in greater detail).

The one or more openings 121 are decided to have an elliptical shape. However, as described elsewhere herein, any shape of the one or more openings 121 may be encompassed. For instance, the one or more openings 121 may have an elliptical shape, a circular shape, a curved shape, a bent shape, a pointed shape, a corner shape, an edged shape, substantially circular segment shape, and / or combinations thereof.

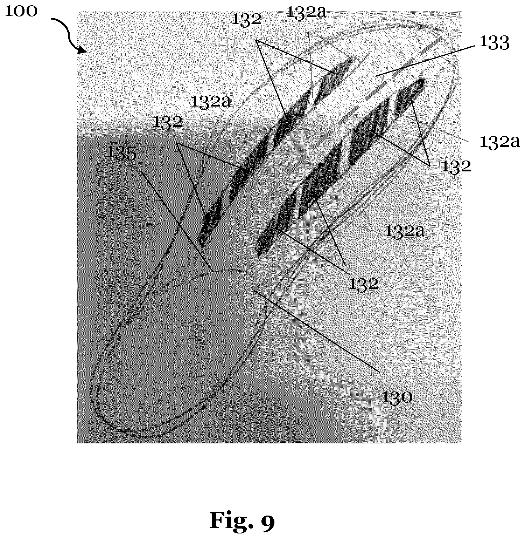

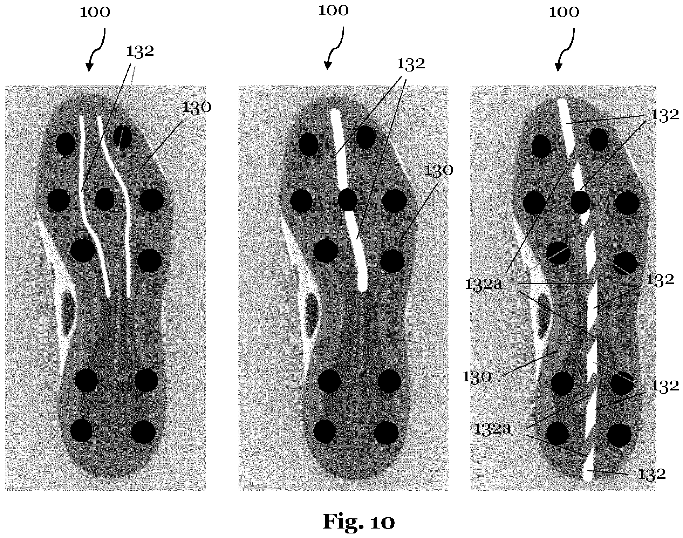

**Fig. 9** shows an exemplary article of footwear 100 with one or more studs 131 (not shown in Fig. 9), in particular a sports shoe, according to an embodiment of the present disclosure. **Fig. 10** shows an exemplary article of footwear 100 with one or more studs 131, in particular a sports shoe, according to an embodiment of the present disclosure. The features shown in these figures are applicable to all other embodiments of the article of footwear 100 described elsewhere herein. For brevity, not all features of the article of footwear 100 are provided with reference signs. The embodiment shown in Fig. 9 and Fig. 10 illustrate the one or more apertures 132 of the outsole 130 of the article of footwear 100 in greater detail.

As can be seen, the one or more apertures 132 are at least partially connected with one or more beams 132a. The one or more beams 132a are preferably one or more angled beams 132a, having an angle of with respect to a heel to toe axis HT (similar to the midline 135 from heel to toe of the outsole 130 indicated in Fig. 9) of at least 10°, preferably at least 20°, more preferably at least 30°, even more preferably at least 40°, most preferably at least 45°, and / or of at most 80°, preferably at most 70°, more preferably at most 60°, even more preferably at most 50°, most preferably at most 45°.

As understood, under certain load conditions, the one or more beams 132a may provide a mechanical "lock" as described elsewhere herein. This may provide more stability, especially when apertures 132 are employed which have a greater length as seen along the heel to toe axis HT (similar to the midline 135 from heel to toe of the outsole 130 indicated in Fig. 9).

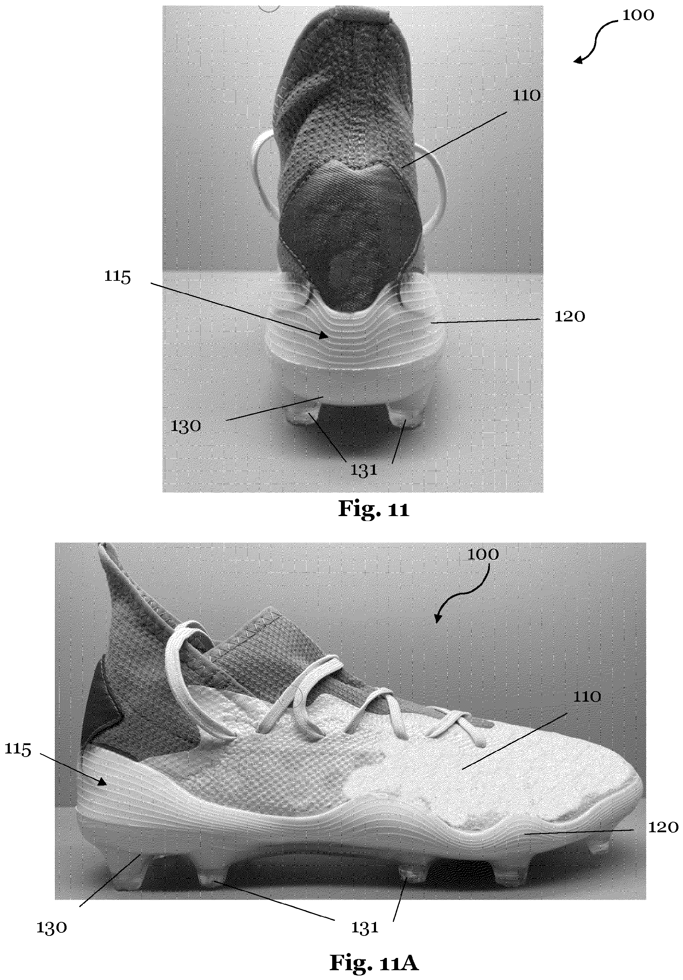

**Fig. 11** shows an exemplary article of footwear 100 with one or more studs 131, in particular a sports shoe, according to an embodiment of the present disclosure. **Fig. 11A** shows the embodiment of Fig. 11 in a different perspective. The features shown in these figures are applicable to all other embodiments of the article of footwear 100 described elsewhere herein. For brevity, not all features of the article of footwear 100 are provided with reference signs. The embodiment shown in Fig. 11 and Fig. 11A illustrates that by way of the intermediate component 120, one or more additional functional parts may not be necessary. For instance, a heel counter and / or any separate part to support the heel of the upper 110 and / or the heel of the outsole 130 may not be necessary.

As can be seen, the article of footwear 100 with one or more studs 131 comprises an upper 110 and an intermediate component 120 configured to act as a cushioning component. The intermediate component 120 is arranged in an underfoot portion 111 (not indicated in Fig. 11 and Fig. 11A but indicated in Fig. 1 among others) of the article of footwear 100 and extends at least partially to a medial side portion 112 and / or to a lateral side portion 113 of the upper 110. Further, as can be seen in particular in Fig. 11, the intermediate component 120 wraps at least the heel portion 115 of the upper 110 at least partially.

The intermediate component 120 of this embodiment can act as a functional part. Thereby, it may provide one or more functions for which otherwise separate parts or elements would be required. For instance, the intermediate component 120 can adopt the function of a heel counter. In this manner, the intermediate component 120 may provide for the following: the intermediate component 120 may provide stability, support, and / or structure to the rear part of the article of footwear 100. This may particularly be the case around the heel portion 115 of the upper 110 and / or the ankle. The provision of support helps to prevent excessive side-to-side or lateral movement of the foot within the article of footwear 100. This stability may be essential for various athletic activities that involve quick changes in direction, pivoting, and lateral movements. Further, the intermediate component 110 may help to lock the heel substantially in place within the article of footwear 100. This may substantially prevent slipping or moving around during athletic activities. This may be crucial for maintaining control and preventing injuries. Moreover, the intermediate component 110 may contributes to a better overall fit of the article of footwear 100. This can improve comfort and may reduce the chances of blisters or discomfort caused by friction. Further, the intermediate component 110 may help to add durability to the article of footwear 100, helping it retain its shape and integrity over time. This may be important for sports shoes that may endure significant stress and wear.

The intermediate component 120 providing the function of a heel counter has the advantage that it renders the provision of an external heel counter obsolete. Further, the intermediate component 120 may act as a cushioning component merely in certain parts of the upper 110. For instance, it may only act as a cushioning component in an underfoot portion of the upper 110. In other parts of the upper 110, the intermediate component 120 may act as a functional element on the upper 110.

The intermediate component 120 providing the function of a heel counter is merely one of various functions that the intermediate component 120 can provide. Additionally, or alternatively to the function of a heel counter, the intermediate component 120 may provide for a reinforcement to certain parts of the upper 110. For instance, the intermediate component 120 may provide for a reinforcement to one or more of the lateral side, the medial side, the vamp portion, and the toe portion of the upper 110.

Such functions that the intermediate component 120 provides may be imparted to the intermediate component 120 in various ways. As an example, the intermediate component 120 may be a single material component, for instance, it may be made of polyurethane (PU). Further, said single material may be injected into a mold at once to form the intermediate component 120. When the material is injected into the mold, the material may fill a volume formed therein where wide and / or narrow portions are provided. The material may fill every possible portion of the volume. When the material comes in proximity to portions that are substantially narrower during the injection, said material may be exposed to a greater pressure during the foaming process compared to wide portions. This has the advantage that differences in densities may be provided. For instance, narrow portions of the volume that are filled with the material of the intermediate component 120 may have a greater density subsequent to foaming compared to wide portions. This may allow to impart further functions to the intermediate component 120, which makes it very useful, as the intermediate component 120 can be tailored to any kind of functions. It may also be possible to shape the intermediate component 120 in a heel portion 115 of the upper 110 substantially in correspondence to a conventional heel counter. This may further contribute to the advantage that the intermediate component 120 provides a certain function.

In a further embodiment of the article of footwear 100 that is compatible with all the remaining embodiments described in here, the intermediate component 120 may act, next to its functionalities described in detail elsewhere herein, also as a bonding medium. For instance, the intermediate component 120 may act as a bonding medium between the upper 110 and an outsole 130. This has the benefit that usage of any bonding medium including but not limited to glue and / or adhesive becomes obsolete although usage thereof is not precluded.

In a further embodiment of the article of footwear 100 that is compatible with all the remaining embodiments described in here, chemical and / or physical blowing agents may be employed for the manufacturing of the intermediate component 120. This has the advantage that direct soling of (super critical) fluids and / or foams can be facilitated. In particular, this can be facilitated in between the outsole 130 and the upper 110.

In various examples, it is possible that the intermediate component 120 providing for the added benefits described herein can be additionally or alternative used for garments, and / or equipment used in athletic activities. That is, the intermediate component 120 is not necessarily limited to the example of an article of footwear 100. It could be feasible that the concept of the intermediate component 120 is transferred to any kind of athletic activity in which more comfort for an athlete needs to be provided.

Nevertheless, it was found that the advantages of the intermediate component 120 described herein are particularly pronounced when applied to an article of footwear 100 with one or more studs 131, such as a sports shoe used during an athletic activity, particularly during soccer, rugby, or the like.

It is noted that the term "athletic activity", "athletic activities" is to be understood such that it includes one or more and / or any combination of at least the following non-exhaustive list: aerobics, athletic exercises, running, hiking, climbing, group fitness classes, walking, cycling, yoga, soccer, tennis, football, basketball, doing a workout, volleyball, gymnastics, weightlifting, cross-training, baseball, softball, rugby, field hockey, wrestling, squash, track and field (such as sprinting, long jump, high jump), cross-country skiing.

In any of the embodiments of the article of footwear 100 as described herein, the intermediate component 120 comprises a polymeric foam, in particular at least one of polyurethane (PU) foam, such as thermoplastic polyurethane (TPU) foam, polyamide (PA) foam, polyether-block-amide (PEBA) foam, thermoplastic polyester ether elastomer (TPEE) foam, wherein the intermediate component 120 preferably comprises a homogeneous foam material.

Homogeneous foam material or homogeneous foams are known to the skilled person. In some instances, they are referred to as polymeric foams. These foams are produced by injection molding or compression molding, for example. In case a mold is used, liquefied polymer material, which may contain a blowing agent, is typically placed in a mold cavity and a process of foaming the polymer material takes place within the mold cavity. Homogeneous foams typically do not have a recognizable granular structure, i.e., they substantially do not have any identifiable particles within the finished foam.

Particle foam material or particle foam on the other hand is different compared to homogeneous foam. To produce particle foam, expanded particles (or beads) are created in a first step from a particulate base material that is foamed. These expanded beads can then be assembled in a second step to form a coherent structure in which the individual particle boundaries are discernible, i.e., clearly visible, in the finished foam. Expanded in this context means that each individual particle has a core of foamed material with many small foam cells, i.e., the particle may not consist of a compact, solid material.

In any of the embodiments of the article of footwear 100 as described herein, the intermediate component 120 can comprise a lattice structure.

In any of the embodiments of the article of footwear 100 as described herein, the intermediate component 120 can be made by an additive manufacturing process, such as a 3D printing process. The additive manufacturing process for the intermediate component 120 can comprises at least one of the following methods: 3d printing; a micro-melt-drop based method; a powder-bed based method; stereolithography, SLA; selective laser sintering, SLS; selective laser melting, SLM; continuous liquid interface production, CLIP; fused deposition modeling, FDM; digital light processing, DLP; multi jet modeling, MJM; a polyjet method; a film transfer imaging method, FTI; electron beam melting, EBM; electron beam additive manufacturing, EBAM; subtractive rapid proto-typing, SRP.

It is noted that in some cases, it may be possible to easily recognize that a product has been made using an additive manufacturing process, such as a 3D printing process or the like. In particular, it may be recognized by way of certain characteristics or visual cue. In some cases, the skilled person may recognize that a product has been made using an additive manufacturing process by minor investigative effort to the product. Some but not all features based on which one could potentially distinguish a product made through additive manufacturing compared to other processes are the following: In many additive manufacturing processes, objects may be built layer by layer. This may result in a noticeable layered or striated appearance on the surface of the product, especially if the layers are not post-processed or finished to be smooth. However, some advanced 3D printing techniques and post-processing methods can minimize or eliminate this layering effect. Additive manufacturing may enable the creation of highly complex and intricate geometries that may be difficult or substantially impossible to achieve with other manufacturing methods. Additive manufacturing may often be chosen for its ability to easily customize products. For instance, the products may be tailored to specific customer requirements. Some additive manufacturing methods allow for the incorporation of unique features like internal lattice structures and / or hollow sections, which may be difficult and / or expensive to achieve through other manufacturing methods. Depending on the 3D printing technology used and the material chosen, the product's material properties may differ from those of traditionally manufactured counterparts. For example, 3D-printed metal parts may exhibit slightly different characteristics than parts made through casting or machining. In some cases, 3D-printed objects may have visible support structures used during the printing process to ensure stability during printing. These supports are often removed or post-processed after printing. The surface finish of a 3D-printed product can vary depending on the chosen print settings and post-processing techniques. Some 3D-printed products may have a distinct texture or appearance.

In any of the embodiments of the article of footwear 100 as described herein, the intermediate component 120 and / or the article of footwear 100 may be manufactured as follows. In a first step, an upper is provided, wherein the upper is arranged onto a last, which is preferably made from a metal. In a second step, an outsole is provided, wherein the outsole is arranged in a bottom mold part. In a third step, the upper is moved together with the last towards the outsole, and a medial and / or a lateral mold part is preferably substantially closed. In a fourth step, a material, preferably a single material, such as polyurethane, thermoplastic polyurethane, or any other material described elsewhere herein, is injected, preferably in a volume formed between the upper and the outsole. In a fifth step, the mold may be opened and the upper, the intermediate component, and the outsole are removed as one article of footwear 100 from the last.

In any of the embodiments of the article of footwear 100 as described herein, the intermediate component 120 comprises a material having a lower tensile strength compared to the outsole 130.

In any of the embodiments of the article of footwear 100 as described herein, the intermediate component 120 can be provided to the upper 110 by means of injection or stock-fitting.

It is noted that any one or more of the embodiments described herein and / or examples may be combined with further aspects as described herein and details of the embodiments and / or examples may also be omitted, as will be understood by the skilled person. The scope of protection is determined by the claims and is not limited by the embodiments and / or examples disclosed in the above figures.

### 6. Further embodiments

The invention is further described by the following embodiments:
1. An article (100) of footwear with one or more studs (131), in particular a sports shoe such as a soccer shoe, the article (100) of footwear comprising:
   an upper (110); and
   an intermediate component (120), configured to act as a cushioning component;
   wherein the intermediate component (120) is arranged in an underfoot portion (111) of the article (100) of footwear and extends at least partially to a medial side portion (112) and / or to a lateral side portion (113) of the upper (110).
2. The article (100) of footwear of the preceding embodiment, wherein the intermediate component (120) wraps the upper (110) at least partially, wherein the intermediate component (120) optionally comprises a foam component and / or a lattice structure.
3. The article (100) of footwear of any one of the preceding embodiments, wherein the intermediate component (120) wraps at least one of a toe portion (114), a medial side portion (112), a heel portion (115), or a lateral side portion (113), in particular a midfoot lateral side portion (116) of the upper (110) at least partially.
4. The article (100) of footwear of any one of the preceding embodiments, wherein the intermediate component (120) wraps a complete periphery (117) of the upper (110).
5. The article (100) of footwear of any one of the preceding embodiments, wherein the underfoot portion (111) comprises a forefoot portion (111a), a midfoot portion (111b), and / or a rearfoot portion (111c) of the upper (110), wherein the underfoot portion (111) preferably comprises the forefoot portion (111a), the midfoot portion (111b), and the rearfoot portion (111c).
6. The article (100) of footwear of any one of the preceding embodiments, wherein the intermediate component (120) covers at least 50 %, preferably at least 60 %, more preferably at least 70 %, even more preferably at least 80 %, further more preferably at least 90 %, further more preferably at least 95 %, most preferably 100 % of the underfoot portion (111).
7. The article (100) of footwear of any one of the preceding embodiments, wherein the intermediate component (120) comprises one or more openings (121), wherein the one or more openings (121) are preferably arranged in a medial side portion (112) of the upper (110), in particular a midfoot medial side portion (118) of the upper (110).
8. The article (100) of footwear of any one of the preceding embodiments, wherein the intermediate component (120) is arranged inside the upper (110), preferably as an innermost layer so as to contact a foot of a wearer at least partially when the article (100) of footwear is worn, wherein the intermediate component (120) optionally comprises a finish applied on a surface of the intermediate component (120), such as one or more of a textile, a spray, a coating.
9. The article (100) of footwear of any one of the preceding embodiments 1 to 6, wherein the intermediate component (120) is arranged outside the upper (110).
10. The article (100) of footwear of any one of the preceding embodiments, wherein the article (100) of footwear further comprises an outsole (130) arranged below the intermediate component (120).
11. The article (100) of footwear of embodiment 10, wherein the outsole (130) comprises one or more apertures (132), configured to allow the intermediate component (120) to expand at least partially into the outsole (130).
12. The article (100) of footwear of the preceding embodiment, wherein the apertures (132) have an elongated shape, preferably a shape of one of slits, grooves, cuts, or vents.
13. The article (100) of footwear of embodiment 11 or 12, wherein the one or more apertures (132) define through holes.
14. The article (100) of footwear of any one of the preceding embodiments 11 to 13, wherein the one or more apertures (132) extend in a longitudinal direction of the outsole (130).
15. The article (100) of footwear of any one of the preceding embodiments 11 to 14, wherein the one or more apertures (132) have a closed boundary.
16. The article (100) of footwear of any one of the preceding embodiments 11 to 15, wherein the one or more apertures (132) are arranged in a forefoot portion (111a) of the outsole (130).
17. The article (100) of footwear of any one of the preceding embodiments 11 to 16, wherein at least two of the apertures (132) are spaced apart on opposing sides of a midline (135) from heel to toe of the outsole (130).
18. The article (100) of footwear of any one of the preceding embodiments 11 to 17, wherein the one or more apertures (132) are at least partially connected with one or more beams (132a),
   wherein the one or more beams (132a) are preferably one or more angled beams (132a), having an angle of with respect to a heel to toe axis (HT) of at least 10°, preferably at least 20°, more preferably at least 30°, even more preferably at least 40°, most preferably at least 45°,
   and / or of at most 80°, preferably at most 70°, more preferably at most 60°, even more preferably at most 50°, most preferably at most 45°.
19. The article (100) of footwear of any one of the preceding embodiments 10 to 18, wherein the one or more studs (131) of the article (100) of footwear are arranged on the outsole (130).
20. The article (100) of footwear of any one of the preceding embodiments 11 to 19, wherein the one or more apertures (132) are arranged between two or more of studs (131).
21. The article (100) of footwear of any one of the preceding embodiments, if dependent on embodiment 11, wherein the one or more apertures (132) have a length, preferably in a longitudinal direction of the outsole (130), of at least 1 cm, preferably at least 2 cm, more preferably at least 4 cm, even more preferably at least 6 cm, further more preferably at least 7 cm, further more preferably at least 8 cm, further more preferably at least 10 cm, further more preferably at least 12 cm, further more preferably at least 14 cm, most preferably of at least 15 cm,
   and /or of at most 25 cm, preferably at most 23 cm, more preferably at most 20 cm, even more preferably at most 18 cm, further more preferably at most 16 cm, most preferably of at most 15 cm.
22. The article (100) of footwear of any one of the preceding embodiments, wherein the intermediate component (120) extends in an upward direction (UD) as seen from a bite line (134) of the upper (110) by a length of at least 2 mm, preferably at least 3 mm, more preferably at least 5 mm, even more preferably at least 8 mm, more preferably at least 10 mm, even more preferably at least 12 mm, further more preferably at least 15 mm, most preferably of at least 20 mm,
   and /or of at most 40 mm, preferably at most 35 mm, more preferably at most 30 mm, even more preferably at most 25 mm, most preferably of at most 20 mm.
23. The article (100) of footwear of any one of the preceding embodiments, wherein the intermediate component (120) has a thickness of at most 5 mm, preferably at most 4 mm, more preferably at most 3 mm, even more preferably at most 2 mm, even more preferably at most 1 mm, even more preferably at most 0.8 mm, most preferably at most 0.5 mm.
24. The article (100) of footwear of any one of the preceding embodiments, wherein the intermediate component (120) comprises one or more ribs (122), wherein the one or more ribs (122) are preferably arranged in a predefined pattern.
25. The article (100) of footwear of any one of the preceding embodiments, wherein the intermediate component (120) is at least partially visible from outside the article (100) of footwear.
26. The article (100) of footwear of any one of the preceding embodiments wherein the intermediate component (120) comprises a polymeric foam, in particular at least one of polyurethane (PU) foam, thermoplastic polyurethane (TPU) foam, polyamide (PA) foam, polyether-block-amide (PEBA) foam, thermoplastic polyester ether elastomer (TPEE) foam, wherein the intermediate component (120) preferably comprises a homogeneous foam material,
   wherein the intermediate component (120) optionally comprises a lattice structure, wherein the intermediate component (120) is optionally made by an additive manufacturing process, such as a 3D printing process.
27. The article (100) of footwear of any one of the preceding embodiments, if dependent on embodiment 10, wherein the intermediate component (120) comprises a material having a lower tensile strength compared to the outsole (130).
28. The article (100) of footwear of any one of the preceding embodiments, wherein the intermediate component (120) is provided to the upper (110) by means of injection or stock-fitting.
29. An article (100) of footwear with one or more studs (131), in particular a sports shoe, such as a soccer shoe, the article (100) of footwear comprising:
   an upper (110);
   an intermediate component (120); and
   an outsole (130);
   wherein the outsole (130) comprises one or more apertures (132), configured to allow the intermediate component (120) to expand at least partially into the outsole (130).
30. The article (100) of footwear of embodiment 29, wherein the article (100) of footwear is the article (100) of footwear of any one of the preceding embodiments 1 to 28.
31. The article (100) of footwear of any one of the preceding embodiments, wherein the article (100) of footwear is one of a soccer shoe, a rugby shoe, an American football shoe or a golf shoe.

### 7. List of reference signs used

- 100: article of footwear with one or more studs, in particular a sports shoe
- 110: upper
- 111: underfoot portion of the article
- 111a: forefoot portion of the underfoot portion of the article
- 111b: midfoot portion of the underfoot portion of the article
- 111c: rearfoot portion of the underfoot portion of the article
- 112: medial side portion (from heel portion to toe portion)
- 113: lateral side portion (from heel portion to toe portion)
- 114: toe portion
- 115: heel portion
- 116: midfoot lateral side portion
- 117: periphery of the upper
- 118: midfoot medial side portion
- 120: intermediate component
- 121: one or more openings of the intermediate component
- 122: one or more ribs
- 130: outsole
- 131: stud(s)
- 132: aperture(s)
- 132a: one or more beams
- 133: forefoot portion of the outsole
- 134: periphery of the outsole / bite line of the upper
- 135: midline from heel to toe of the outsole
- 136: rearfoot portion of the outsole
- HT: heel to toe axis (longitudinal direction of the outsole)
- UD: upward direction
- ML: medial to lateral axis

## Claims

1. An article (100) of footwear with one or more studs (131), in particular a sports shoe such as a soccer shoe, the article (100) of footwear comprising:
an upper (110); and
an intermediate component (120), configured to act as a cushioning component;
wherein the intermediate component (120) is arranged in an underfoot portion (111) of the article (100) of footwear and extends at least partially to a medial side portion (112) and / or to a lateral side portion (113) of the upper (110).

2. The article (100) of footwear of the preceding claim, wherein the intermediate component (120) wraps the upper (110) at least partially, wherein the intermediate component (120) optionally comprises a foam component and / or a lattice structure.

3. The article (100) of footwear of any one of the preceding claims, wherein the intermediate component (120) wraps at least one of a toe portion (114), a medial side portion (112), a heel portion (115), or a lateral side portion (113), in particular a midfoot lateral side portion (116) of the upper (110) at least partially.

4. The article (100) of footwear of any one of the preceding claims, wherein the intermediate component (120) wraps a complete periphery (117) of the upper (110).

5. The article (100) of footwear of any one of the preceding claims, wherein the intermediate component (120) covers at least 50 %, preferably at least 60 %, more preferably at least 70 %, even more preferably at least 80 %, further more preferably at least 90 %, further more preferably at least 95 %, most preferably 100 % of the underfoot portion (111).

6. The article (100) of footwear of any one of the preceding claims, wherein the intermediate component (120) is arranged inside the upper (110), preferably as an innermost layer so as to contact a foot of a wearer at least partially when the article (100) of footwear is worn, wherein the intermediate component (120) optionally comprises a finish applied on a surface of the intermediate component (120), such as one or more of a textile, a spray, a coating.

7. The article (100) of footwear of any one of the preceding claims, wherein the article (100) of footwear further comprises an outsole (130) arranged below the intermediate component (120),
optionally, wherein the outsole (130) comprises one or more apertures (132), configured to allow the intermediate component (120) to expand at least partially into the outsole (130),
optionally, wherein the apertures (132) have an elongated shape, preferably a shape of one of slits, grooves, cuts, or vents,
optionally, wherein the one or more apertures (132) define through holes,
optionally, wherein the one or more apertures (132) extend in a longitudinal direction of the outsole (130).

8. The article (100) of footwear of claim 7, wherein the one or more apertures (132) have a closed boundary.

9. The article (100) of footwear of claim 7 or 8, wherein the one or more apertures (132) are arranged in a forefoot portion (111a) of the outsole (130).

10. The article (100) of footwear of any one of the preceding claims 7 to 9, wherein at least two of the apertures (132) are spaced apart on opposing sides of a midline (135) from heel to toe of the outsole (130).

11. The article (100) of footwear of any one of the preceding claims 7 to 10, wherein the one or more apertures (132) are at least partially connected with one or more beams (132a), wherein the one or more beams (132a) are preferably one or more angled beams (132a), having an angle of with respect to a heel to toe axis (HT) of at least 10°, preferably at least 20°, more preferably at least 30°, even more preferably at least 40°, most preferably at least 45°,
and / or of at most 80°, preferably at most 70°, more preferably at most 60°, even more preferably at most 50°, most preferably at most 45°.

12. The article (100) of footwear of any one of the preceding claims 7 to 11, wherein the one or more studs (131) of the article (100) of footwear are arranged on the outsole (130).

13. The article (100) of footwear of any one of the preceding claims 7 to 12, wherein the one or more apertures (132) are arranged between two or more of studs (131).

14. The article (100) of footwear of any one of the preceding claims, wherein the intermediate component (120) comprises one or more ribs (122), wherein the one or more ribs (122) are preferably arranged in a predefined pattern.

15. The article (100) of footwear of any one of the preceding claims, wherein the intermediate component (120) is at least partially visible from outside the article (100) of footwear.
